# EUROPEAN PATENT SPECIFICATION

(11) **EP 3 971 551 B1**
(45) Date of publication and mention of the grant of the patent: **25.03.2026**
(21) Application number: 21196904.3
(22) Date of filing: 15.09.2021
(51) Int. Cl.: G01N 15/06, G01N 15/10, G01N 15/14, G01N 15/1433

(54) **METHOD OF DETECTING AN INFECTION USING NEGATIVE SORTING**
VERFAHREN ZUM NACHWEIS EINER INFEKTION MITTELS NEGATIVER SORTIERUNG
PROCÉDÉ DE DÉTECTION D'UNE INFECTION À L'AIDE DE TRI NÉGATIF

(30) Priority: 21.09.2020 US 202063080980 P
(43) Date of publication of application: 23.03.2022
(73) Proprietor: OP-Hygiene IP GmbH, 4704 Niederbipp (CH)
(72) Inventor: Lang, Albrecht, 4704 Niederbipp (CH); Steltenkamp, Siegfried, 53229 Bonn-Niederholtorf (DE); Ophardt, Heiner, 4422 Arisdorf (CH)
(74) Representative: Grünecker Patent- und Rechtsanwälte PartG mbB

(56) References cited:
- EP-A1- 3 699 574
- CN-B- 103 923 825
- GB-A- 2 561 194
- US-A1- 2014 093 867
- US-A1- 2017 248 508

## Description

### Cross-Reference to Related Application

This application claims priority to the September 21, 2020 filing date of United States Provisional Patent Application Serial No. 63/080,980.

### Field of the Invention

This invention relates to methods of detecting biological particles, such as bacteria and viruses.

### Background of the Invention

Many human and animal diseases are caused by infectious agents such as viruses, bacteria, fungi, prions, and parasites. In order to limit the spread of these diseases, it is often useful to identify infected individuals, so that precautions can be taken to limit their risk of transmitting the infection to others. For example, once an infected person is identified, they may be able to seek treatment for the disease, which may for example reduce the amount of time that they remain infectious. They may also be able to engage in practices such as social distancing to reduce their risk of transmitting the disease to others.

The applicant has appreciated a number of limitations and disadvantages of prior art methods of identifying infected individuals. For example, many tests for infectious diseases are expensive, complex, invasive and/or time intensive. These disadvantages of prior art methods can significantly reduce their capacity to rapidly identify infected individuals. For example, the nose swab tests used to test for COVID-19 have in many jurisdictions been in short supply, have been prohibitively expensive, and/or have suffered from significant time delays before test results are received. These limitations have likely contributed to the rapid spread of the virus in many jurisdictions.

A further limitation of the prior art is that typically individuals are only tested for a disease after they have developed symptoms. As many infectious diseases are contagious before the onset of symptoms, an infected individual may be infectious for a significant period of time before they are ultimately tested, during which time they may spread the disease to others. In some cases, contagious individuals may remain asymptomatic or may only develop mild symptoms, and thus never get tested. In many cases, the available test is too expensive, complex, and/or labor or time intensive for widespread testing to be offered to asymptomatic individuals.

An additional limitation of the prior art is that tests are typically designed to detect a specific, previously known disease or disease causing agent. As such, in order to screen individuals for a variety of different possible infections, several different tests would need to be administered, each of which may be expensive, complex, time intensive, resource intensive, and/or labor intensive. For this reason, widespread screening of a large population for a wide variety of different possible infections may not be feasible. Furthermore, many existing tests may be unable to detect novel diseases, such as new viruses that cross over into human populations from an animal host. This inability to test for novel diseases may prevent public health authorities from rapidly recognizing when a new disease is present in a population, and may hinder efforts to contain the spread of the disease.

GB 2561194 A discloses a point-of-care testing system for providing a blood count. The system uses dielectrophoresis and a microfluidic element to separate a blood sample by constituent parts. The separating of the liquid sample into one or more of its constituent parts can be perfomed based on a mass or a momentum of said consituents.

US2014/093867 A1 discloses a method of concentrating and/or filtering more than one component of interest from a sample using a spiral inertial filtration device.

### Summary of the Invention

To at least partially overcome some of the disadvantages of previously known methods and devices, in one aspect the present invention provides a method comprising passing a fluid through a negative sorting device that produces a negatively sorted stream of the fluid from which particles present in the fluid that are above a threshold size have been removed, and analyzing the negatively sorted stream to obtain a measure of a concentration of particles of interest in the negatively sorted stream. The applicant has appreciated that negatively sorting a fluid to remove particles that are larger than a particle of interest, such as a virus or a bacteria, can preferably allow the particle of interest to be detected without requiring the particle of interest to be directly manipulated or sorted.

The applicant has appreciated that a microfluidic particle sorter can advantageously be used to produce the negatively sorted stream in at least some preferred embodiments of the invention. It is known that microfluidic channels can be used to separate and concentrate particles in a fluid according to their size. See for example F.J. Cruz and K. Hjort, "High pressure inertial focusing for separation and concentration of bacteria at high throughput" 2017 J. Phys.: Conf. Ser. 922 012001; and Cruz et al., "Inertial focusing with sub-micron resolution for separation of bacteria" Lab Chip, 2019, 19, 1257, which are incorporated herein by reference. A known limitation of microfluidic particle sorters is that, as the size of the target particle decreases, the fluid pressure required to operate the system rapidly increases. This limits the usefulness of the known technology for sorting very small particles, such as particles smaller than 1 micron.

The applicant has advantageously appreciated that a microfluidic particle sorter can be used for the detection of small particles of interest, such as viruses, without requiring the particles of interest to be focused or positively sorted by the microfluidic particle sorter. For example, the microfluidic particle sorter can be configured to focus or positively sort particles larger than the particle of interest into a first stream or channel, and to direct the remaining fluid, from which the larger particles have been removed, into a second stream or channel. The applicant has advantageously appreciated that, if the small particles of interest are not focused or positively sorted by the microfluidic particle sorter, they will preferably remain dispersed throughout the fluid, and will be present in both the first stream containing the larger particles, as well as the second stream from which the larger particles have been removed. The second stream can then preferably be analyzed to obtain a measure of the concentration of the particles of interest in the fluid.

Advantageously, since the second stream does not contain the larger particles that were directed into the first stream, the analysis of the second stream can be performed using techniques that do not or are unable to reliably distinguish between the particles of interest and the larger particles. This preferably allows the analysis to be performed in a simple and cost effective manner. The analysis may be performed using any technique and/or apparatus that is suitable for obtaining a measure of the concentration of the particles of interest, such as for example electrical, acoustic, optical, magnetic, spectroscopic, chemical, and/or electromagnetic methods. The analysis may for example use a simple measurement of the electrical impedance of the second stream to obtain a measure of the concentration of the particles of interest in the second stream. In contrast, if the second stream contained both the particles of interest and the larger particles, then a much more sophisticated and complex analysis may be required to distinguish between the particles of interest and the larger particles.

A further advantage of at least some embodiments of the present invention is that, since the method preferably relies on negative sorting to produce the second stream (i.e. removal of the larger particles, rather than manipulation of the smaller particles of interest), the microfluidic particle sorter can preferably be operated at a lower pressure than would otherwise be needed to focus or positively sort the particles of interest. This preferably allows the apparatus performing the method to be relatively simple, low cost, and small, without for example requiring components that can generate and withstand very high pressures.

The applicant has appreciated that the invention may be particularly advantageous for detecting infectious biological particles, such as viruses. For example, the method could be used to screen individuals for signs of a possible infection, by negatively sorting and analyzing fluid collected from the individual. The fluid could, for example, be water that has contacted the individual's body, such as by being swished in their mouth or dispensed onto their hands. Preferably, the microfluidic particle sorter is configured to produce a negatively sorted stream that will contain any viral particles present in the fluid, with larger particles such as bacteria and skin cells being sorted into a separate stream or streams. A measure of the concentration of viral particles in the fluid can then be obtained by analyzing the negatively sorted stream.

In some embodiments of the invention, the presence of any particles in the negatively sorted stream may be used as an indication of a possible infection. If a possible infection is detected, action can then be taken to reduce the risk of the individual transmitting the infection to others. For example, an individual identified as having a possible infection could be directed to self-isolate or practice social distancing. They could also be directed to take another more specific test, such as a COVID-19 PCR test, to determine whether they may be infected with a particular pathogen of concern. The method can thus be used to pre-screen individuals for possible infections in a manner that is preferably low cost and fast, and which assists in identifying those individuals that should receive a more complex, expensive, and/or time and labor intensive test for a specific pathogen.

In one preferred embodiment of the invention, the method is performed using a hand cleaning fluid dispenser. The dispenser preferably dispenses hand cleaning fluid onto a user's hand, at least some of which is then collected for analysis to detect the presence of a virus or other pathogen on the user's hand. The fluid may, for example, be collected by a drip tray located below the user's hand, which collects excess fluid or overspray that drips off of the user's hand. The fluid is then directed to a negative sorting device, such as a microfluidic particle sorter, for example by a fluid pump. The negatively sorted stream is then analyzed for signs of a possible infection in the manner as described above. If a possible infection is detected, the user may be notified for example by a flashing red light on the dispenser. The user can then seek medical attention, seek testing for a specific pathogen of concern, self-isolate, or take other actions to reduce the risk of transmitting the infection to others, either voluntarily or under the direction of public health authorities.

Advantageously, hand cleaning fluid dispensers are widely available in many locations, including most washrooms and throughout many facilities such as hospitals and long term care homes, and are frequently used by many individuals. Adapting hand cleaning fluid dispensers to perform the method of the present invention would thus preferably allow for the wide-spread screening or pre-screening of a large number of individuals for possible infections, including pre-symptomatic and asymptomatic individuals.

The relative simplicity of at least some preferred embodiments of the invention, including the ability to operate at relatively low pressures and use relatively simple analytic techniques, preferably allows the method to be performed using small and relatively low cost components that can be incorporated into a hand cleaning fluid dispenser without adding too much complexity or expense. Dispensers capable of performing the method can thus preferably be made widely available.

In one preferred embodiment, the method includes compiling data from a large number of dispensers at different geographic locations. This data can then be used to establish a measure of the prevalence of infections in the different geographic locations over time, which can in turn be used to inform public health decisions. For example, if the fluid dispensers in a particular location, such as a hospital or city, are reporting an increase in the number of virus-size particles present on people's hands, then public health authorities may decide to increase testing for a pathogen of concern in that area, provide warnings to practice social distancing in that area, or take other actions to reduce the risk of disease transmission.

Advantageously, since the method of the present invention is preferably not limited to the detection of one specific pathogen or virus, it is preferably capable of detecting at least some novel pathogens before a specific test for that pathogen has been developed. For example, if a novel virus were to pass from an animal host into a human population, fluid dispensers performing the method of the present invention would preferably be capable of detecting the presence of the novel virus on people's hands. This information could then be used to take action to reduce the spread of the virus, such as directing possibly infected individuals to self-isolate. Public health authorities could also preferably use the data to rapidly identify and investigate infections as they emerge and spread through the population, including both novel and previously known viruses, so that appropriate action can be taken to protect public health. The method can thus preferably be used to provide an early warning of an infection or infections spreading through a population.

Optionally, data regarding the concentration of particles of interest in the tested fluid may be used in conjunction with other data. For example, the fluid dispensers could be equipped with infrared temperature sensors that sense the temperature of the user's hand to detect possible signs of fever. An analysis to establish a measure of the likelihood that the user has an infection could then be performed using both the concentration data and the temperature data. Data from other sources could be used as well. For example, data from an activity tracker such as a Fitbit^{™} smartwatch worn by the user could be collected wirelessly by the dispenser or an associated computer or server, such as via Bluetooth^{™} or Wi-Fi^{™}. The collected data may include, for example, information about the user's biological functions or characteristics, such as heartrate, blood pressure, respiratory function, and blood-oxygen levels, as well as activity levels, location data, and travel history. This additional information may be used to further improve the assessment of the likelihood that the user has an infection. Optionally, the dispenser could be configured to transmit a warning that the user may have an infection to the user's smartwatch or mobile device to be displayed to the user on the smartwatch or mobile device. The smartwatch or mobile device could also receive and display warnings to avoid particular geographic locations where the risk of infection has been determined to be high.

In at least some preferred embodiments, the present invention is believed to be particularly well suited for detecting viral infections. One reason for this is that the mere presence of viral particles on a person's hands or other body parts may in at least some circumstances provide a strong indication that the person has a viral infection. This is because a person would generally not be expected to have any significant quantity of viral particles on their body unless they have a viral infection. As such, detecting any viral particles in the negatively sorted stream can be used in at least some embodiments of the invention as a strong indication that the individual has a viral infection. Optionally, the assessment of the likelihood that a person has a viral infection could be performed by comparing the measure of the concentration of particles of interest in the sample fluid to a baseline. The baseline could, for example, be the measure of the concentration of particles of interest that is obtained from a fluid that is known to contain no viral particles, or from a fluid that is known to come from a person who is not infected with a virus.

Optionally, any change in the measure of the concentration of the particles of interest in the sample fluid as compared to the measure of the concentration of the particles of interest in the baseline that suggests an increase in the concentration of the particles of interest in the sample fluid as compared to the baseline could be used as an indication that the person likely has an infection. Alternatively, the magnitude of the change in the measure of the concentration of the particles of interest as compared to the baseline may be required to reach some predetermined threshold before the person is identified as likely to have an infection. In either case, it is not necessary to determine the actual concentration of the particles of interest in the negatively sorted stream. Rather, all that is required is a detectable change in the measure of the concentration of the particles of interest as compared to the baseline. For example, if the particles of interest are known to reduce the electrical impedance of the fluid as the concentration of the particles of interest increases, then a measurable reduction in the electrical impedance of the sample fluid as compared to the baseline may be used as an indication that there is a greater concentration of the particles of interest in the sample fluid than in the baseline.

The invention may also optionally be used to detect other types of infections, such as bacterial infections. For example, the microfluidic particle sorter could be configured to sort out and separate larger particles such as skin cells, while leaving bacteria cells unsorted and thus present in the negatively sorted stream. The negatively sorted stream could then be analyzed to obtain a measure of the concentration of bacteria cells in the fluid.

A complication of using the method for detecting bacterial infections is that bacteria are normally present on the human body, even in the absence of an infection. As such, merely detecting the presence of bacteria on a person's skin normally would not be expected to provide a reliable indication that the person has a bacterial infection. However, changes in the quantity and/or type of bacteria present on the skin may provide an indication of a bacterial infection in some circumstances. As such, comparing the measure of the concentration of particles of interest in a sample fluid as compared to a baseline may in some circumstances be useful for assessing whether a person may have a bacterial infection.

The method of the present invention could also optionally be used to detect the presence or quantity of bacteria on surfaces that should have no bacteria or only a small quantity of bacteria on them. For example, when preparing or packaging certain food products, it may be desirable for the food products to have no bacteria present thereon or only a very small quantity of bacteria. By contacting the food product with a fluid such as water, and then processing and analyzing the fluid in accordance with the present invention, the presence of bacteria on the food product can preferably be detected. If the food product is found to have an unacceptable level of bacterial contamination, the product can then be sent for further testing, cleaning, or disposal, for example.

The method of the present invention is not limited to performing an analysis on the negatively sorted stream only. Rather, focused or positively sorted streams could be analyzed as well, in addition to or in place of the analysis of the negatively sorted stream. For example, if the microfluidic particle sorter is configured to sort bacteria into a focused stream while allowing smaller viral particles to remain unfocused or unsorted, an analysis could be performed on both the negatively sorted stream and the focused stream. The negatively sorted stream could be analyzed as described above to obtain a measure of the concentration of viral particles in the fluid, and the focused stream could also be analyzed to obtain a measure of the concentration of bacteria in the fluid. The focused stream could be analyzed by any suitable method, including for example by electrical, acoustic, magnetic, spectroscopic, chemical, optical and/or electromagnetic techniques. If the concentration of bacteria in the focused stream is found to be higher than in a comparison baseline, this may for example provide an indication of a possible bacterial infection.

Optionally, the particle sorter could be configured to sort a variety of different particles into different streams based on their size, shape, and/or other properties. A measure of the concentration of particles in some or all of the streams could then be obtained, to look for possible signs of infection or relevant contamination. For example, the sorter could be configured to sort bacteria having different sizes and/or shapes into different streams. If the concentration of bacteria in one of the streams increases as compared to a baseline, this could provide an indication of a possible bacterial infection. Since the size and/or shape of the bacteria is preferably known, in some circumstances it may be possible to identify the type or types of bacteria that are most likely to be causing the infection. This information may be useful for a variety of different purposes, such as assisting medical personnel in assessing what types of further tests may be needed, for prescreening individuals for a particular pathogen of concern, and/or for providing an early warning sign of an infectious disease spreading through a population.

The subject matter of the present invention is defined by the combination of features as provided in claim 1. Preferred embodiments are the subject of the dependent claims.

### Brief Description of the Drawings

Further aspects and advantages of the invention will appear from the following description taken together with the accompanying drawings, in which:
Figure 1 is a perspective view of a fluid dispenser in accordance with a first embodiment of the present invention;
Figure 2 is a perspective view of the fluid dispenser shown in Figure 1, with a user's hand shown positioned below a fluid outlet of the dispenser, and with fluid dispensed onto the user's hand dripping into a drip tray positioned below the user's hand;
Figure 3 is a schematic cross-sectional view of the drip tray of the dispenser shown in Figure 1;
Figure 4 is a schematic top view of a microfluidic particle sorter carried by the drip tray shown in Figure 3;
Figure 5 is an enlarged view of area A of the microfluidic particle sorter shown in Figure 4, showing a focused fluid stream and an unfocused fluid stream, with bacteria present in the focused fluid stream and viruses present in both the focused fluid stream and the unfocused fluid stream;
Figure 6 is an enlarged view of area A of the microfluidic particle sorter shown in Figure 4, with bacteria present in the focused fluid stream and no viruses present in either the focused fluid stream or the unfocused fluid stream;
Figure 7 is a schematic top view of a microfluidic particle sorter for a fluid dispenser in accordance with a second embodiment of the present invention;
Figure 8 is an enlarged view of area B of the microfluidic particle sorter shown in Figure 7, showing a focused fluid stream and an unfocused fluid stream, with skin cells present in the focused fluid stream and with bacteria and viruses present in both the focused fluid stream and the unfocused fluid stream;
Figure 9 is a schematic top view of a microfluidic particle sorter for a fluid dispenser in accordance with a third embodiment of the present invention;
Figure 10 is an enlarged view of area C of the microfluidic particle sorter shown in Figure 9, showing a first focused fluid stream, a second focused fluid stream, and an unfocused fluid stream, with skin cells present in the first focused fluid stream, bacteria present in the second focused fluid stream, and with viruses present in the first focused fluid stream, the second focused fluid stream, and the unfocused fluid stream;
Figure 11 is an enlarged view of a branch point of a microfluidic particle sorter for a fluid dispenser in accordance with a fourth embodiment of the present invention, showing a focused fluid stream and an unfocused fluid stream, with skin cells present in the focused fluid stream and with bacteria present in both the focused fluid stream and the unfocused fluid stream;
Figure 12 is a perspective view of a microfluidic particle sorter in accordance with a fifth embodiment of the present invention;
Figure 13 is a perspective view of an experimental setup for demonstrating negative sorting of particles by a microfluidic particle sorter;
Figure 14 is a perspective view of the experimental setup shown in Figure 13;
Figure 15 is a top view of the microfluidic particle sorter used in the experimental setup shown in Figure 13;
Figure 16 is a perspective view of the experimental setup shown in Figure 12, showing the microfluidic particle sorter positioned below a microscope;
Figure 17 is a picture of a sorting microchannel of the microfluidic particle sorter shown in Figure 16 taken using the microscope;
Figure 18 is an enlarged view of area D of the picture shown in Figure 17;
Figure 19 is a picture of the sorting microchannel shown in Figure 17, taken further downstream from the picture shown in Figure 17;
Figure 20A is a picture of the sorting microchannel shown in Figure 19, taken further downstream from the picture shown in Figure 19;
Figure 20B is a picture of the sorting microchannel shown in Figures 17 to 20, showing a branch point where the sorting microchannel branches into eight output channels;
Figure 20C is another picture of the sorting microchannel shown in Figures 17 to 20, showing the branch point where the sorting microchannel branches into the eight output channels;
Figure 21 is a schematic drawing of a first stage sorter of an array of sorters in accordance with a sixth embodiment of the present invention;
Figure 22 is a perspective view of a second stage sorter of the array of sorters in accordance with the sixth embodiment of the invention;
Figure 23 is a perspective view of a third stage sorter of the array of sorters in accordance with the sixth embodiment of the invention;
Figure 24 is a perspective view of a fluid dispenser in accordance with a seventh embodiment of the present invention;
Figure 25 is a perspective view of a fluid pathway of the fluid dispenser shown in Figure 24;
Figure 26 is a microscopic image of hand cleaning fluid overspray that has contacted a person's hand;
Figure 27 is a microscopic image of a sorting microchannel containing a fluid with E. coli bacteria cells and 10 micron beads;
Figure 28 is a top view of a microfluidic particle sorter used for a particle sorting experiment;
Figure 29 is a microscopic image of a sorting microchannel of the microfluidic particle sorter of Figure 28;
Figure 30 is a processed binary image prepared from the image shown in Figure 30;
Figure 31 is a graphic showing the results of the particle sorting experiment performed using the microfluidic particle sorter of Figure 28;
Figure 32 is a schematic drawing of a microfluidic particle sorter in accordance with an eighth embodiment of the present invention;
Figure 33 is a graphic showing the results of an experiment measuring the electrical impedance of a fluid containing different concentrations of E. coli;
Figure 34 is a perspective view of a fluid dispenser in accordance with a ninth embodiment of the present invention;
Figure 35 is a perspective view of a microscope of the fluid dispenser shown in Figure 34; and
Figure 36 is a microscopic image of a fluid sample taken by the microscope shown in Figure 35.

### Detailed Description of the Drawings

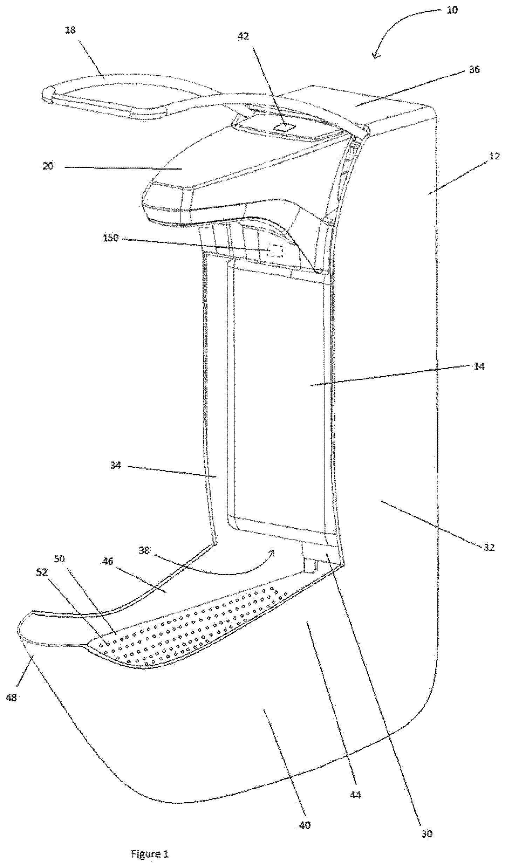

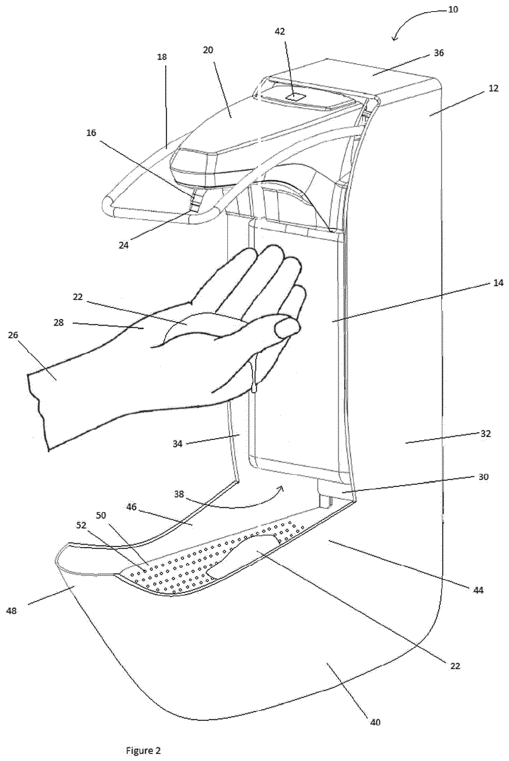

Figures 1 and 2 show a fluid dispenser 10 in accordance with a first embodiment of the present invention. The fluid dispenser 10 is adapted to be secured to a wall, not shown, and is adapted for manual activation by a user 26 urging an actuator lever 18 downwardly from the rest position shown in Figure 1 to the depressed position shown in Figure 2 so as to dispense hand cleaning fluid 22 from a fluid outlet 24 onto the user's hand 28.

Referring to Figure 2, the fluid dispenser 10 has a housing 12, a fluid reservoir 14, a pump mechanism 16, the actuator lever 18, a nozzle shield 20, and a drip tray 40 that extends forwardly from the bottom of the housing 12. Other than the drip tray 40, the fluid dispenser 10 has a construction generally similar to that shown and described in United States Patent No. 7,748,573 to Anhuf et al., issued July 6, 2010, which is incorporated herein by reference.

The housing 12 has a back plate 30, spaced side walls 32 and 34, and a top wall 36 defining an interior cavity 38 therebetween. The fluid reservoir 14 is a plastic bottle that sits within the interior cavity 38 of the housing 12 and contains a supply of the hand cleaning fluid 22 to be dispensed from the dispenser 10. The hand cleaning fluid 22 may, for example, be hand sanitizer containing an alcohol such as isopropanol and/or ethanol. The reservoir 14 may have any suitable structure, such as that shown and described in United States Patent No. 7,748,573 to Anhuf et al., and is removable from the housing 12 so that it can be refilled or replaced when the supply of fluid 22 within the reservoir 14 is running low, as is described and shown in more detail in United States Patent No. 7,748,573 to Anhuf et al.

The pump mechanism 16 is coupled to the fluid reservoir 14 for dispensing the fluid 22 contained in the fluid reservoir 14 out through the fluid outlet 24. The pump mechanism 16 may have any suitable structure, and may for example be in the form of a piston pump assembly as shown and described in United States Patent No. 7,748,573 to Anhuf et al. The pump mechanism 16 is activated by depressing the actuator lever 18 from the rest position of Figure 1 to the depressed position of Figure 2, as is known in the art.

The nozzle shield 20 is removably coupled to the housing 12 and has a similar structure to that shown and described in United States Patent No. 7,748,573 to Anhuf et al. When coupled to the housing 12, the nozzle shield 20 substantially covers the pump mechanism 16, protecting the pump mechanism 16 from contamination and damage. As can be seen in Figures 1 and 2, an indicator light 42 is positioned on a top surface of the nozzle shield 20.

As shown in Figures 1 and 2, the drip tray 40 has two drip tray sidewalls 44 and 46 that extend forwardly from the sidewall 32 and the sidewall 34 of the housing 12, respectively. The drip tray sidewalls 44 and 46 curve towards each other to meet at a front end 48 of the drip tray 40. A horizontal fluid receiving platform 50 extends between the back plate 30 of the housing 12 and the front end 48 of the drip tray 40. The fluid receiving platform 50 is positioned below the fluid outlet 24 for receiving dispensed fluid 22 that drips off of a user's hand 28 positioned below the fluid outlet 24, as shown in Figure 2.

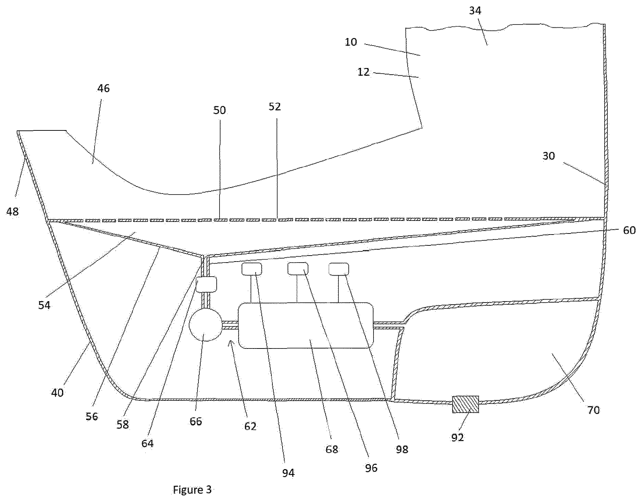

The fluid receiving platform 50 has a plurality of small drainage holes 52 that extend vertically through the fluid receiving platform 50. As shown in Figure 3, the drainage holes 52 open into a fluid collecting chamber 54 positioned below the fluid receiving platform 50. The fluid collecting chamber 54 has a funnel shaped fluid collecting surface 56 that is sloped downwardly to an inlet opening 58 of a fluid receiving channel 60. Fluid 22 that drips off of a user's hand 28 onto the fluid receiving platform 50 passes through the drainage holes 52 into the fluid collecting chamber 54, and is directed by the fluid collecting surface 56 into the inlet opening 58 of the fluid receiving channel 60.

The fluid 22 that is received by the fluid receiving channel 60 is directed through a fluid pathway 62. As shown schematically in Figure 3, the fluid pathway 62 carries the fluid 22 through a sieve-like filter 64 downstream of the inlet opening 58; a fluid pump 66 downstream of the filter 64; a microfluidic particle sorter 68 downstream of the fluid pump 66; and into a waste storage chamber 70 downstream of the microfluidic particle sorter 68.

The filter 64 is preferably configured to remove any large particles that may be present in the fluid 22, such as large particles of dirt or clusters of dead skin. The filter 64 may, for example, be configured to remove any particles larger than 60 microns.

The fluid pump 66 is configured to pump the fluid 22 through the fluid pathway 62 from the inlet opening 58 to the waste storage chamber 70. Any suitable fluid pump 66 construction could be used, including for example a pump 66 driven by an electric motor. The fluid pump 66 is configured to pass the fluid 22 through the microfluidic particle sorter 68 with sufficient fluid pressure and/or flow velocity to achieve the desired particle sorting, as described in more detail below.

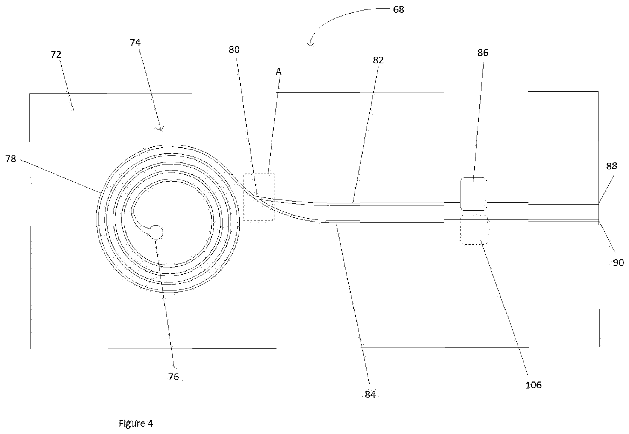

The microfluidic particle sorter 68 is shown schematically in Figure 4. The microfluidic particle sorter 68 has a polymer chip body 72 with a microchannel structure 74 formed therein. The microchannel structure 74 has a microchannel inlet 76 that receives the fluid 22 from the fluid pump 66. A spiral shaped sorting microchannel 78 extends from the microchannel inlet 76 to a branch point 80, where the sorting microchannel 78 splits into a first output channel 82 and a second output channel 84.

As shown schematically in Figure 4, the first output channel 82 passes through a first analyzing device 86, which is configured to obtain a measure of the concentration of particles of interest in the first output channel 82. The first analyzing device 86 may have any suitable structure and may employ any suitable technique or combination of techniques for measuring or detecting the concentration of the particles of interest. The first analyzing device 86 may, for example, use electrical, acoustic, optical, thermal and/or electromagnetic techniques to analyze the fluid 22 in the first output channel 82. The first analyzing device 86 may, for example, include or use one or more of the following: near field detection, near field spectroscopy, holography, optical trap-resonators, electrical impedance measurements, electrical resistance measurements, and measurements of fluid mechanical properties such as viscosity or surface tension. Optionally, the first analyzing device 86 is configured to measure the electrical impedance of the fluid 22 in the first output channel 82 to obtain a measure of the concentration of the particles of interest in the fluid 22.

The first output channel 82 extends from the branch point 80 to a first channel outlet 88, and the second output channel 84 extends from the branch point 80 to a second channel outlet 90. The fluid 22 that has passed through the microfluidic particle sorter 68 is discharged from the first channel outlet 88 and the second channel outlet 90 into the waste storage chamber 70. As shown in Figure 3, the waste storage chamber 70 has a stop member 92 that can be removed to allow the fluid 22 contained therein to be disposed.

As shown schematically in Figure 3, the drip tray 40 carries a battery 94, a processor 96, and a communication device 98, which are electronically connected to the first analyzing device 86 on the microfluidic particle sorter 68.

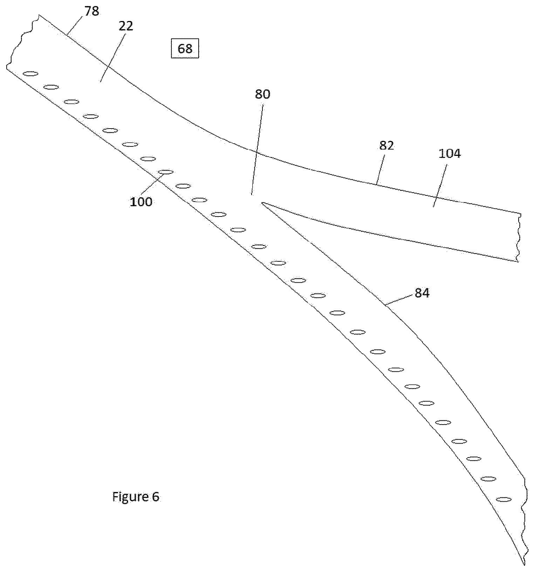

A first preferred manner of operating the fluid dispenser 10 will now be described with reference to Figures 1 to 6. To dispense hand cleaning fluid 22 from the fluid outlet 24 onto a user's hand 28, the actuator lever 18 is depressed from the rest position shown in Figure 1 to the depressed position shown in Figure 2, as is known in the art. Preferably, the pump mechanism 16 is configured to dispense a sufficient quantity of the fluid 22 so that at least some of the fluid 22 drips off of the user's hand 28 into the drip tray 40. Upon contacting the user's hand 28, the fluid 22 preferably picks up at least some of the particles that are present on the user's hand 28. To assist in cleaning the user's hand 28 and in transferring the particles from the user's hand 28 into the fluid 22, the user 26 preferably rubs the fluid 22 over the user's hand 28 while the user's hand 28 is positioned over the drip tray 40.

The fluid 22 that drips into the drip tray 40 from the user's hand 28 passes through the drainage holes 52 and into the fluid collecting chamber 54, where it is directed to the inlet opening 58 by the fluid collecting surface 56. The fluid 22 is then drawn through the fluid pathway 62 by the fluid pump 66. As the fluid 22 passes through the filter 64, large particles such as clusters of dead skin are removed from the fluid 22. The filtered fluid 22 then passes through the fluid pump 66 and into the microfluidic particle sorter 68.

The fluid 22 enters the microfluidic particle sorter 68 at the microchannel inlet 76, and travels through the spiral shaped sorting microchannel 78 towards the branch point 80 under the fluid pressure generated by the fluid pump 66. As the fluid 22 travels through the sorting microchannel 78, at least some of the particles present in the fluid 22 are sorted by size and/or shape.

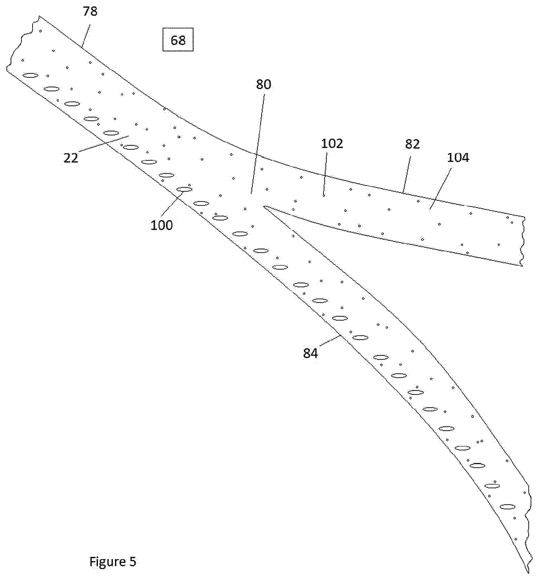

The particles that are sorted by the sorting microchannel 78 depend on the operating parameters of the microfluidic particle sorter 68, including the microchannel structure 74, the fluid pressure, and the type of fluid 22 in which the particles are carried. For example, as can be seen in the enlarged view of the branch point 80 shown in Figure 5, the operating parameters may be selected so that bacteria 100 present in the fluid 22 are sorted by the sorting microchannel 78 into a focused stream that is directed into the second output channel 84, while any smaller particles that may be present in the fluid 22, such as the viruses 102 shown in Figure 5, remain unfocused and dispersed throughout the fluid 22. The viruses 102 are therefore present in both the first output channel 82 and the second output channel 84.

In the embodiment shown in Figures 1 to 6, the dispenser 10 is configured to obtain a measure of the concentration of viruses 102 in the fluid 22 by analyzing the fluid 22 in the first output channel 82. The fluid 22 in the first output channel 82 may be referred to as a negatively sorted stream 104, since the larger bacteria 100 have been removed from the fluid 22 so that only smaller particles, such as the viruses 102, remain. The fluid 22 in the first output channel 82 is analyzed by the first analyzing device 86 in any suitable manner to obtain a measure of the concentration of viruses 102 in the fluid 22. The first analyzing device 86 may, for example, measure the electrical impedance of the fluid 22 in the first output channel 82, the value of which is dependent on the concentration of viruses 102 in the fluid 22.

The measure of the concentration of viruses 102 obtained by the first analyzing device 86 is transmitted to the processor 96, which is preferably configured to establish a measure of the likelihood that the user 26 has an infection based at least in part on the measure of the concentration of viruses 102 in the fluid 22. The processor 96 may, for example, compare the measure of the concentration of viruses 102 in the fluid 22 to a baseline value. The baseline value may, for example, be the expected or measured electrical impedance of the fluid 22 when the fluid 22 contains no viruses 102.

Depending on the properties of the fluid 22 and the particle of interest, the electrical impedance of the fluid 22 will preferably vary in a predictable manner depending on the concentration of the particles of interest in the fluid 22. For example, if the fluid 22 has a high concentration of alcohol, such as ethanol or isopropanol, the electrical impedance of the fluid 22 would generally be expected to decrease as the concentration of viruses 102 in the fluid 22 increases. The relationship between electrical impedance and the concentration of particles of interest for different combinations of fluids 22 and particles of interest can be determined by routine experimentation.

Optionally, if the processor 96 determines that there is any measurable increase in the concentration of particles in the negatively sorted stream 104 as compared to the baseline, then the processor 96 may be configured to conclude that the user 26 likely has an infection. Alternatively, the difference between the measure of the concentration of the particles of interest in the fluid 22 and the baseline value may need to exceed a threshold quantity before the processor 96 determines that the user 26 likely has an infection. The threshold quantity may be selected, for example, to reduce the likelihood of false positives as a result of minor variations in the electrical impedance of the fluid 22 that are caused by factors other than the concentration of viruses 102. For example, in some embodiments of the invention the electrical impedance of the fluid 22 may vary slightly in comparison to a baseline value due to the loss of alcohol by evaporation.

If the processor 96 determines that the user 26 likely has an infection, the processor 96 may for example cause the indicator light 42 to flash red. This is preferably understood by the user 26 as indicating a possible infection, so that the user 26 can take appropriate action such as self-isolating or obtaining a test for a specific pathogen of concern, such as COVID-19. There may, for example, be a sign placed beside the dispenser 10 that advises users 26 what to do in the event that the indicator light 42 flashes red. If the processor 96 determines that there is no sign of an infection, the processor 96 may for example cause the indicator light 42 to light up green.

The processor 96 may also be configured to communicate with external devices via the communication device 98. The processor 96 may, for example, use the communication device 98 to wirelessly send a signal to an external infection monitoring system when a possible infection is detected. The infection monitoring system may, for example, be used by public health authorities to track the prevalence of infections in different geographic locations based at least in part on data received from a plurality of the fluid dispensers 10 installed in different locations.

Optionally, the processor 96 is configured to use the communication device 98 to communicate directly with a mobile device carried by the user 26, such as a smartwatch or smartphone. The processor 96 may, for example, cause the mobile device to display a warning to the user 26 if the processor 96 determines that the user 26 may have an infection. The processor 96 may also receive information from the mobile device via the communication device 98, such as information about the identity of the user 26, the travel history of the user 26, and biological information such as heartrate, blood pressure, respiratory function, and blood-oxygen concentration. Some or all of this information may then be transmitted by the communication device 98 to the infection monitoring system.

The processor 96 may also use additional data when establishing a measure of the likelihood that the user 26 has an infection. For example, the fluid dispenser 10 optionally includes an infrared temperature sensor 150, shown in dotted lines in Figure 1, which detects the temperature of the user's hand 28. The processor 96 may, for example, be configured to determine that the user 26 may have an infection if the temperature of the user's hand 28 is above a threshold temperature, even if no viruses 102 were detected in the fluid 22. The processor 96 could also collect additional data, such as travel history and biological information from a mobile device carried by the user 26, and establish a measure of the likelihood that the user 26 has an infection based on all of the available information. The processor 96 may, for example, be configured to use a computer learning algorithm that is adapted to consider a wide variety of different data points, to output a measure of the likelihood that the user 26 has an infection based on the data points, and to improve its analysis over time.

Optionally, the dispenser 10 is configured to analyze the fluid 22 in the second output channel 84 in addition to or in place of the analysis of the fluid 22 in the first output channel 82. The microfluidic particle sorter 68 may, for example, include a second analyzing device 106, as shown schematically in dotted lines in Figure 4, for obtaining a measure of the concentration of a second particle of interest in the fluid 22 in the second output channel 84. The second analyzing device 106 may for example be configured to obtain a measure of the concentration of bacteria 100 in the second output channel 84. The second analyzing device 106 may have any suitable structure and may employ any suitable technique or combination of techniques for measuring or detecting the concentration of particles in the second output channel 84. The second analyzing device 106 may, for example, use electrical, acoustic, optical, magnetic, spectroscopic, chemical, and/or electromagnetic techniques to analyze the fluid 22 in the second output channel 84. The second analyzing device 106 may be identical or different from the first analyzing device 86. Optionally, the second analyzing device 106 is configured to measure the electrical impedance of the fluid 22 in the second output channel 84 to obtain a measure of the concentration of the second particles of interest in the fluid 22.

Optionally, the processor 96 is configured to establish a measure of the likelihood that the user 26 has a bacterial infection based at least in part on the measure of the concentration of bacteria 100 in the second output channel 84 obtained by the second analyzing device 86. The processor 96 may, for example, compare the measure of the concentration of bacteria 100 in the second output channel 84 to a baseline value. The baseline value may, for example, be the measure of the concentration of bacteria 100 in fluid 22 obtained from a person who is known to not have a bacterial infection. Optionally, if the measure of the concentration of bacteria 100 in the second output channel 84 exceeds the baseline value by a threshold quantity, then the processor 96 may determine that the user 26 has a possible bacterial infection. This determination may be indicated to the user 26 by, for example, illuminating the indicator light 42 in flashing red light.

As the second output channel 84 may also include particles present in the fluid 22 that were unfocused or unsorted by the microfluidic particle sorter 68, such as viruses 102, in some embodiments of the invention the measure of the concentration of the second particles of interest may be adjusted or processed to account for the possible presence of unfocused or unsorted particles in the second output channel 84. For example, the processor 96 may be configured to adjust the measure of the concentration of the second particles of interest based on the measure of the concentration of the primary particles of interest in the first output channel 82 obtained by the first analyzing device 86. In embodiments where the first and second analyzing devices 86 and 106 measure the electrical impedance of the fluid 22 in the first and second output channels 82 and 84, respectively, the electrical impedance value of the fluid 22 in the first output channel 82 may for example be used as a baseline value against which the electrical impedance of the fluid 22 in the second output channel 84 is compared. For example, if the electrical impedance of the fluid 22 in the second output channel 84 is the same as the electrical impedance of the fluid 22 in the first output channel 84, this may be used as an indication that the second output channel 84 contains no measurable quantity of the second particle of interest. If the electrical impedance of the fluid 22 in the second output channel 84 is lower than the electrical impedance of the fluid 22 in the first output channel 84, this may be used as an indication that the second output channel 84 does appear to contain a measurable quantity of the second particle of interest. The magnitude of the difference between the electrical impedance of the fluid 22 in the first output channel 82 and the electrical impedance of the fluid 22 in the second output channel 84 may be used to obtain a measure of the concentration of the second particle of interest in the second output channel 84 that is adjusted for the possible presence of unfocused or unsorted particles in the second output channel 84.

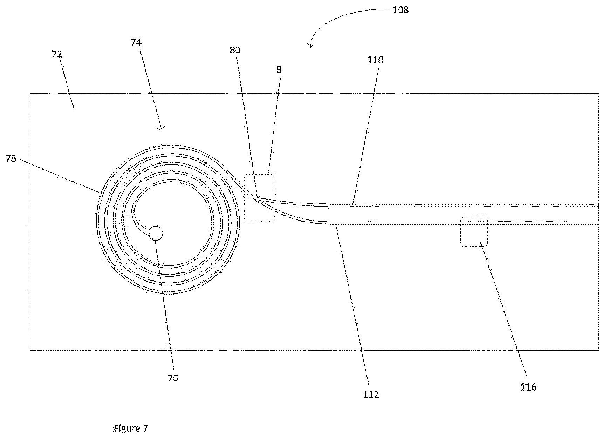

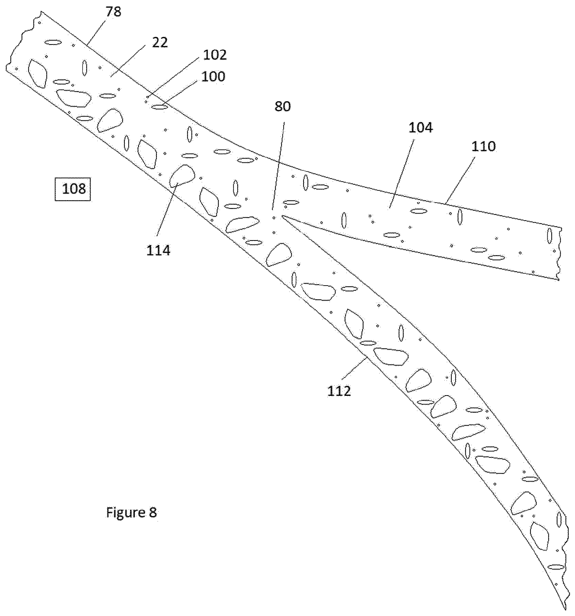

Reference is now made to Figures 7 and 8, which schematically show a first stage microfluidic particle sorter 108 for use in a fluid dispenser 10 in accordance with a second embodiment of the present invention. Like numerals are used to denote like components.

The first stage microfluidic particle sorter 108 shown in Figures 7 and 8 is optionally incorporated into a fluid dispenser 10 that is identical to the one shown in Figures 1 to 6, except with the first stage microfluidic particle sorter 108 positioned in the fluid pathway 62 downstream of the fluid pump 66 and upstream of the microfluidic particle sorter 68, which may also be referred to in this embodiment of the invention as the second stage microfluidic particle sorter 68.

The first stage microfluidic particle sorter 108 has a microchannel structure 74 including a microchannel inlet 76 that receives the fluid 22 from the fluid pump 66 and a spiral shaped sorting microchannel 78 that extends from the microchannel inlet 76 to a branch point 80 where the sorting microchannel 78 splits into a first stage unfocused output channel 110 and a first stage focused output channel 112. The operating parameters of the first stage microfluidic particle sorter 108 may for example be selected so that relatively large particles, such as skin cells 114, are focused and directed into the first stage focused output channel 112, as shown in Figure 8. Any smaller particles that are present in the fluid 22, such as bacteria 100 and viruses 102, remain unsorted by the first stage microfluidic particle sorter 108. The bacteria 100 and viruses 102 therefore remain dispersed throughout the fluid 22, and are present in both the first stage unfocused output channel 110 and the first stage focused output channel 112.

The fluid 22 in the first stage unfocused output channel 110 is preferably directed into the microchannel inlet 76 of the second stage microfluidic particle sorter 68 for further processing and analysis. The second stage microfluidic particle sorter 68 focuses the bacteria 100 into the second output channel 84 and leaves the viruses 102 unfocused and present in both the first output channel 82 and the second output channel 84, as described above with respect to the first embodiment of the invention and shown in Figure 5. The first stage microfluidic particle sorter 108 may, for example, be used to remove large unwanted particles such as skin cells 114 from the fluid 22 before the fluid 22 enters the second stage microfluidic particle sorter 68.

Optionally, the first stage microfluidic particle sorter 108 could include a third analyzing device 116, shown schematically in dotted lines in Figure 7. The third analyzing device 116 could, for example, be configured to obtain a measure of the concentration of a third particle of interest in the first stage focused output channel 112. The third particle of interest could, for example, include clusters of bacteria 100 that are too large to be sorted by the second stage microfluidic particle sorter 68. The measure of the concentration of the clusters of bacteria 100 could be used, for example, by the processor 96 to assess the probability that the user 26 has a bacterial infection.

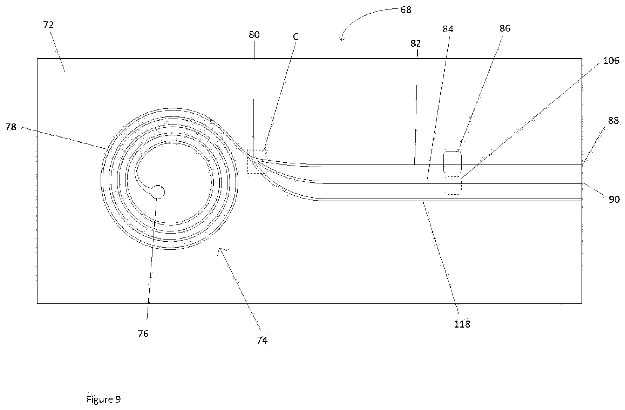

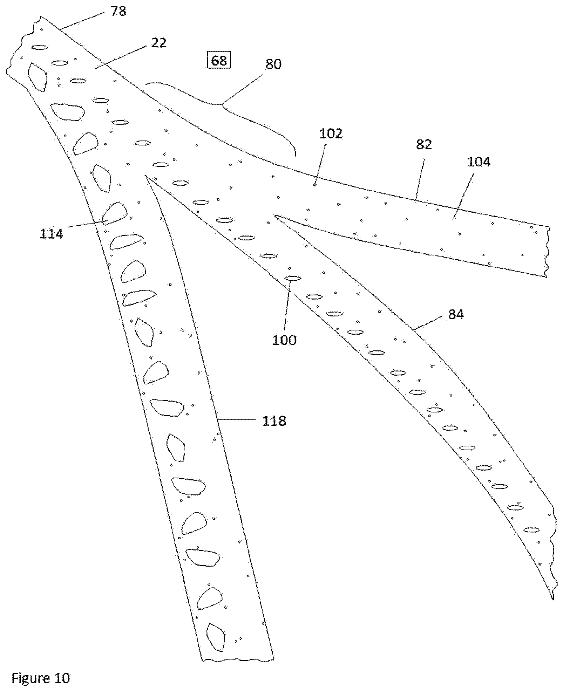

Reference is now made to Figures 9 and 10, which schematically depict a microfluidic particle sorter 68 for use in a fluid dispenser 10 in accordance with a third embodiment of the present invention. Like numerals are used to denote like components.

The microfluidic particle sorter 68 shown in Figures 9 and 10 may be used in a fluid dispenser 10 identical to that shown in Figures 1 to 6. The microfluidic particle sorter 68 shown in Figures 9 and 10 differs from the microfluidic particle sorter 68 shown in Figures 4 to 6 in that the sorting microchannel 78 splits into a first output channel 82, a second output channel 84, and a third output channel 118, instead of just a first output channel 82 and a second output channel 84.

The operating parameters of the microfluidic particle sorter 68 shown in Figures 9 and 10 are preferably selected so that large particles such as skin cells 114 or pathogenic clusters are focused and directed into the third output channel 118; medium sized particles such as bacteria 100 are focused and directed into the second output channel 84; and small particles such as viruses 102 remain unfocused and are present in each of the first output channel 82, the second output channel 84, and the third output channel 118, as shown in Figure 10. Designing the microchannel structure 74 of the microfluidic particle sorter 68 to focus and separate both large skin cells 114 and the medium sized bacteria 100 into separate streams preferably allows the processes of the first stage microfluidic particle sorter 108 and the second stage microfluidic particle sorter 68 of the second embodiment of the invention shown in Figures 7 and 8 to be performed using a single microfluidic particle sorter 68 in the third embodiment of the invention shown in Figures 9 and 10.

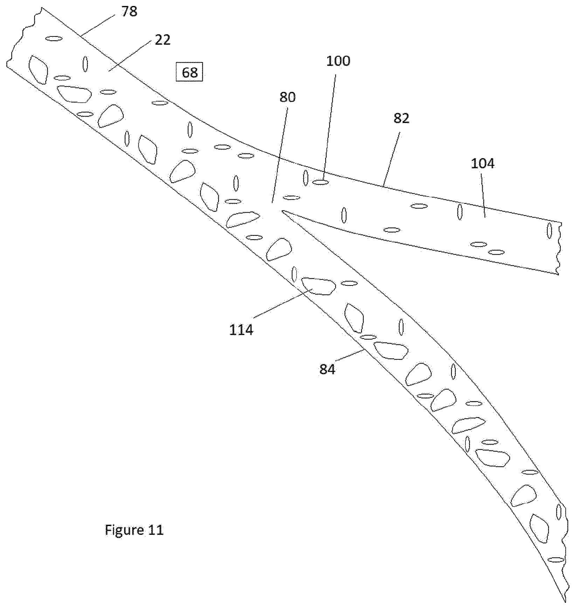

Reference is now made to Figure 11, which shows an enlarged view of the branch point 80 of a microfluidic particle sorter 68 for use in a fluid dispenser 10 in accordance with a fourth embodiment of the present invention. Like numerals are used to denote like components.

The microfluidic particle sorter 68 partially shown in Figure 11, which may be used in a fluid dispenser 10 identical to the one shown in Figures 1 to 6, differs from the microfluidic particle sorter 68 shown in Figures 4 to 6 only in that the operating parameters of the microfluidic particle sorter 68 partially shown in Figure 11 have been selected to focus large particles such as skin cells 114 into the second output channel 84 and to leave medium size particles such as bacteria 100 unfocused or unsorted. The bacteria 100 are therefore present in both the first output channel 84 and the second output channel 84.

The microfluidic particle sorter 68 partially shown in Figure 11 may be used, for example, to obtain a measure of the concentration of bacteria 100 in the fluid 22 using the first analyzing device 86. The measure of the concentration of bacteria 100 in the fluid 22 may be used, for example, by the processor 96 to obtain a measure of the likelihood that the user 26 has a bacterial infection. By using negative sorting to obtain a negatively sorted stream 104 of the bacteria 100, the microfluidic particle sorter 68 preferably allows the measure of the concentration of the bacteria 100 to be obtained without having to specifically manipulate or focus the bacteria 100 in the fluid 22. The microfluidic particle sorter 68 can therefore preferably be operated at a fluid pressure that is lower than that which would otherwise be necessary to focus the bacteria 100 into a focused stream.

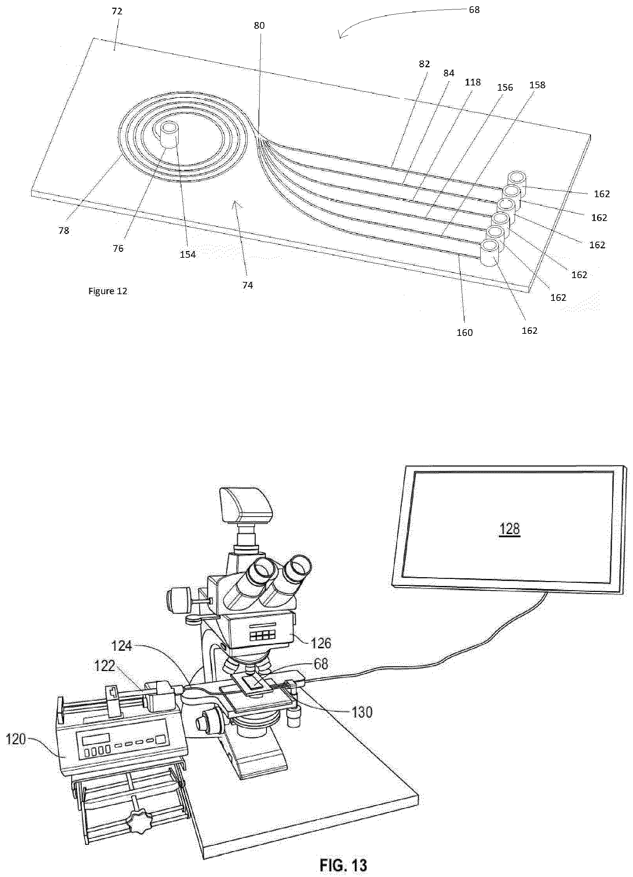

Reference is now made to Figure 12, which shows a microfluidic particle sorter 68 in accordance with a fourth embodiment of the present invention. Like numerals are used to denote like components.

The microfluidic particle sorter 68 shown in Figure 12 may be used in a fluid dispenser 10 identical to that shown in Figures 1 to 6. The microfluidic particle sorter 68 shown in Figure 12 has an inlet connector 154 that protrudes upwardly from the top face of the chip body 72. The inlet connector 154 receives fluid 22, for example from the fluid receiving channel 60 of the dispenser 10 shown in Figures 1 to 6, and directs the fluid 22 into the microchannel inlet 76. The fluid 22 then passes through the spiral shaped sorting microchannel 78, which preferably sorts at least some of the particles present in the fluid 22 by size and/or shape.

In the embodiment shown in Figure 12, at the branch point 80 the sorting microchannel 78 splits into a first output channel 82, a second output channel 84, a third output channel 118, a fourth output channel 156, a fifth output channel 158, and a sixth output channel 160. Preferably, the operational parameters of the microfluidic particle sorter 68 are selected so that at least some particles present in the fluid 22 are focused into one or more focused streams, each focused stream containing particles of a particular size and/or shape. For example, the operational parameters might be selected so that large clusters of bacteria 100 in a size range of 10 microns to 20 microns are focused into a first stream directed into the first output channel 82; smaller clusters of bacteria 100 in a size range of 5 microns to 10 microns are focused into a second stream directed into the second output channel 84; chains of bacteria 100 are focused into a third stream directed into the third output channel 118; spherical single bacteria 100 in a size range from 3 microns to 5 microns are focused into a fourth stream directed into the fourth output channel 156; rod-shaped single bacteria 100 in a size range from 1 micron to 3 microns are focused into a fifth stream directed into the fifth output channel 158; and a negatively sorted stream 104 of the fluid 22 is directed into the sixth output channel 160, the negatively sorted stream 104 containing particles that are too small to be focused into a focused stream, such as viruses that are smaller than 0.8 microns.

In the embodiment shown in Figure 12, the microfluidic particle sorter 68 does not carry a device for analyzing the fluid 22 in the output channels 82, 84, 118, 156, 158, 160. Instead, each output channel 82, 84, 118, 156, 158, 160 extends from the branch point 80 to a respective outlet connector 162 that protrudes upwardly from the top face of the chip body 72. The outlet connectors 162 may for example be connected to tubes that carry the fluid 22 received from each of the output channels 82, 84, 118, 156, 158, 160 to a separate device or devices for analysis and/or disposal. Optionally, the fluid 22 received from all six of the output channels 82, 84, 118, 156, 158, 160 is analyzed to obtain a measure of the concentration of the particles in each output channel 82, 84, 118, 156, 158, 160, or the fluid 22 from only a selected one, two, three, four, or five of the output channels 82, 84, 118, 156, 158, 160 is analyzed. The measure of the concentration of the particles in each output channel 82, 84, 118, 156, 158, 160 may be used, for example, for assessing the likelihood that a person from whom the fluid 22 was collected is has an infection, in the same manner as described above.

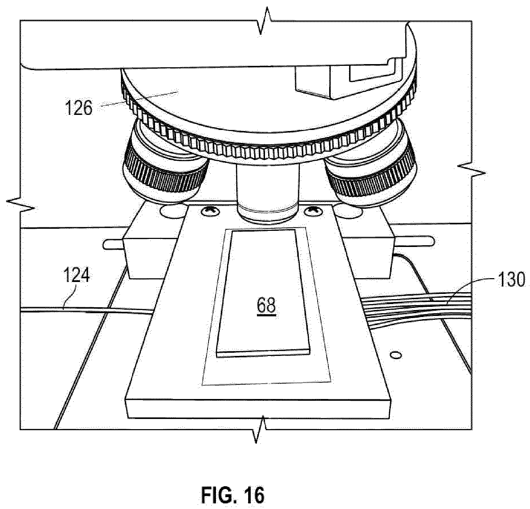

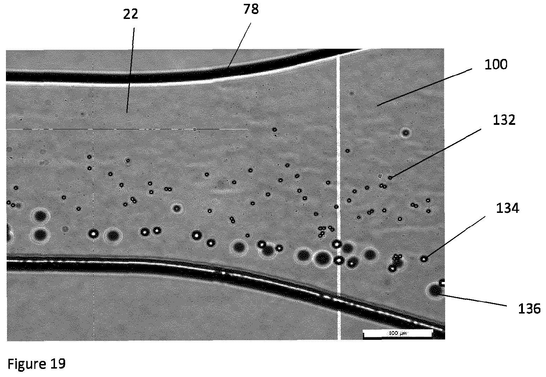

Reference is now made to Figures 13 to 20C, which show an experimental setup for demonstrating negative sorting of particles by a microfluidic particle sorter 68. Like numerals are used to denote like components.

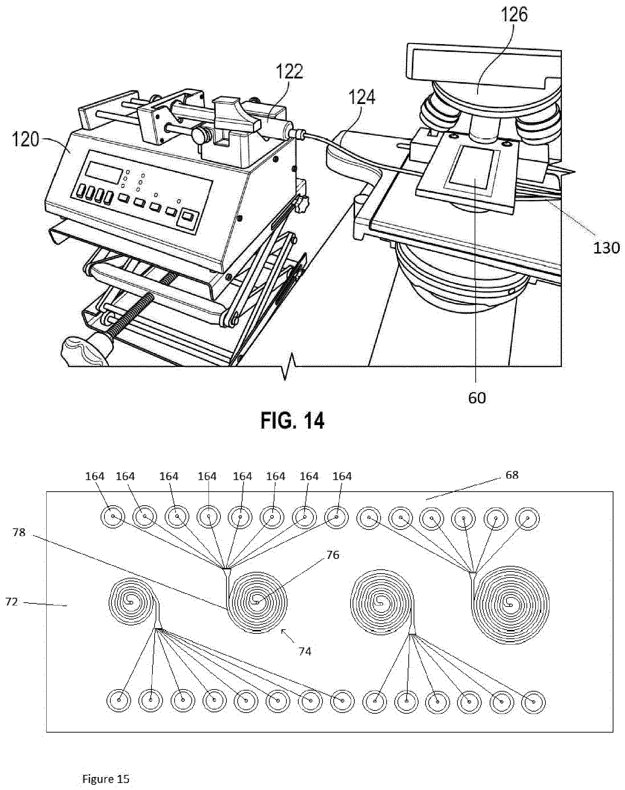

As shown in Figures 13 and 14, the experimental setup includes a syringe pump 120 carrying a syringe 122; an inlet tube 124 connecting the syringe 122 to the microfluidic particle sorter 68; a microscope 126 carrying the microfluidic particle sorter 68; a computer monitor 128 for viewing microscopic images of the microfluidic particle sorter 68 taken using the microscope 126; and outlet tubes 130 connected to the microfluidic particle sorter 68.

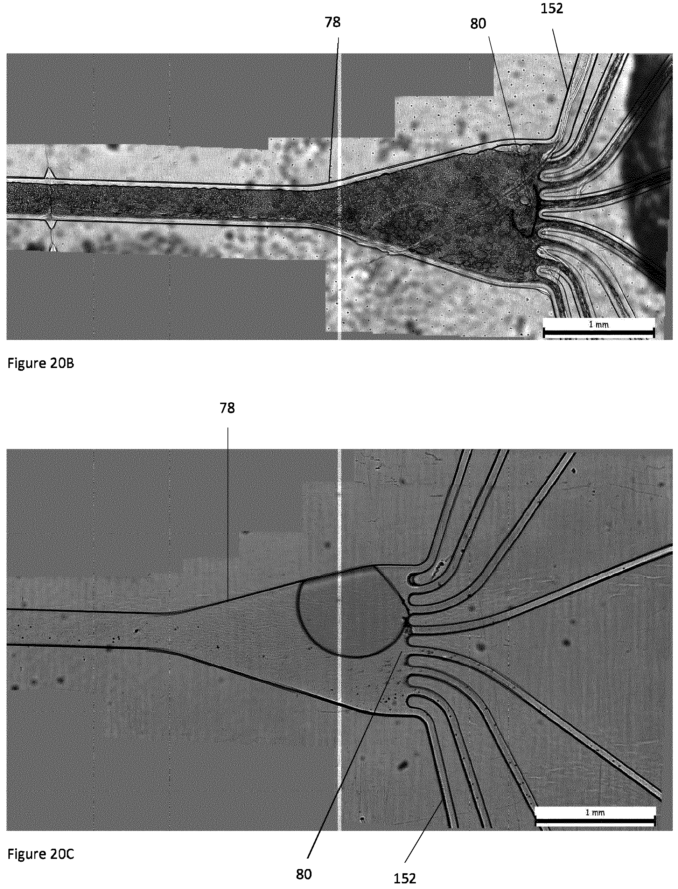

The microfluidic particle sorter 68 used in the experiment is the Fluidic 382^{™} microfluidic spiral sorter manufactured by microfluidic ChipShop GmbH. The Fluidic 382^{™} microfluidic spiral sorter has four different microchannel structures 74 formed in the chip body 72. For the experiment, the second microchannel structure 74 was used, labelled with the numeral 74 in Figure 15. The second microchannel structure 74 has a spiral shaped sorting microchannel 78 with eight turns, a channel width of 300 microns, and a channel depth of 80 microns. As best shown in Figures 20B and 20C, the width of the spiral shaped sorting microchannel 78 increases at the branch point 80 before splitting into eight output channels 152. Each of the output channels 152 has a channel outlet 164 that connects to a respective one of the outlet tubes 130. The syringe pump 120 is the LA-100^{™} manufactured by Landgraf Systems. The microscope 126 is the DM-2700M^{™} manufactured by Leica. The silicon tubes 124, 130 were made by Carl Roth GmbH + Co. KG (Rotilabo^{™} 9556.1), and have an inner diameter of 1 mm and an outer diameter of 3 mm. Luer connectors were also used manufactured by Carl Roth GmbH + Co. KG (Rotilabo^{™} CT62.1, CT69.1).

To perform the experiment, the syringe 122 was filled with water containing E. coli bacteria 100, 3 micron beads 132, 5 micron beads 134, and 10 micron beads 136. The syringe pump 120 was used to pump the water (ultrapure water, 18.2 MOhms·cm resistivity) from the syringe 122, through the tube 124, and through the microfluidic particle sorter 68 at a flow velocity of 550 mL/min. The microscope 126 was used to obtain microscopic images of the distribution of the E. coli bacteria 100, the 3 micron beads 132, the 5 micron beads 134, and the 10 micron beads 136 in the sorting microchannel 78 of the microfluidic particle sorter 68.

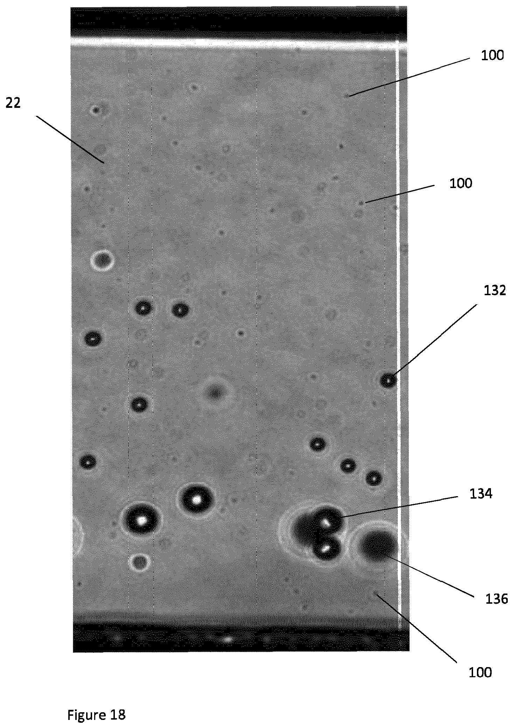

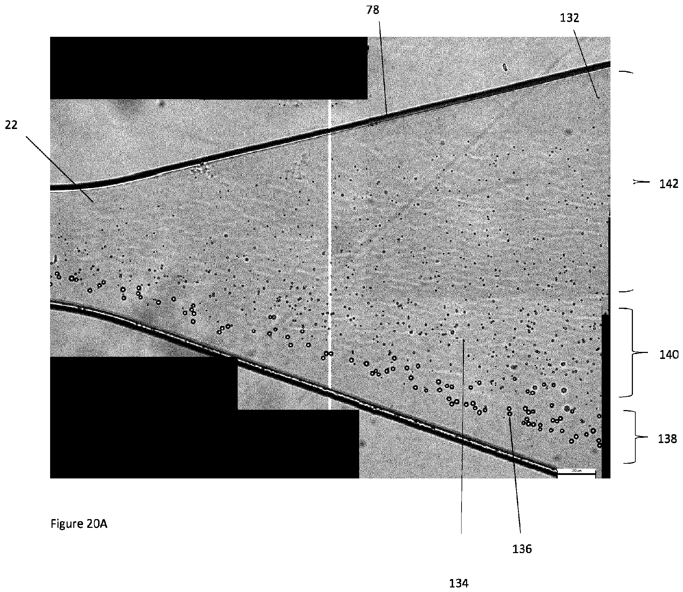

As can be best seen in Figure 20A, the operational parameters of the microfluidic particle sorter 68 in the experimental setup, including the geometry of the sorting microchannel 78 and the flow velocity of the water, focused or sorted the 10 micron beads 136 into a first focused stream 138 and focused or sorted the 5 micron beads 134 into a second focused stream 140. The operational parameters of the microfluidic particle sorter 68 in the experimental setup did not focus or sort the 3 micron beads 132 or the E. coli bacteria 100. As can be seen in Figure 20A, the 3 micron beads 132 therefore remained dispersed throughout the first focused stream 138, the second focused stream 140, and an unfocused stream 142. The E. coli bacteria 100 also remained dispersed throughout the sorting microchannel 78, as can be best seen in the enlarged view shown in Figure 18.

The experimental setup therefore produced a negatively sorted stream 104 that contained some of the particles that were 3 microns or less, and from which the particles larger than 3 microns were removed. If the operational parameters of the microfluidic particle sorter 68 were adjusted, including for example the geometry of the sorting microchannel 78 and/or the flow velocity, the size of the particles that are focused or sorted by the microfluidic particle sorter 68 could be adjusted. For example, it would be possible to adjust the operational parameters so that the 3 micron beads 132 are focused or sorted, and/or the E. coli bacteria 100, which have a width of about 1 micron, are focused or sorted. Generally, smaller canals and higher flow velocities would be needed to focus smaller particles.

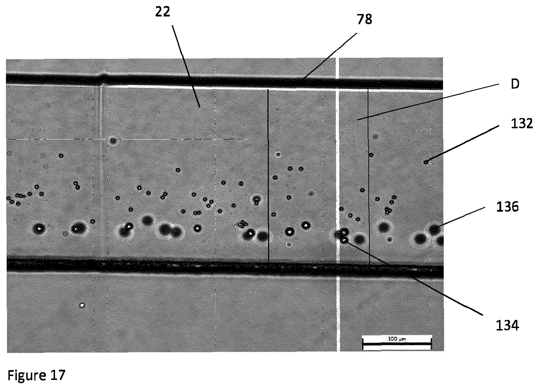

Figures 20B and 20C show microscopic images of the sorting microchannel 78 shown in Figures 17 to 20A. The images shown in Figures 20B and 20C are at a lower magnification than the images shown in Figures 17 to 20A, and show the branch point 80 wherein the sorting microchannel 78 splits into eight output channels 152. The images shown in Figures 20B and 20C were not taken during the experiment described above, and so the bacteria 100 and beads 132, 134, 136 are not visible in Figures 20B and 20C.

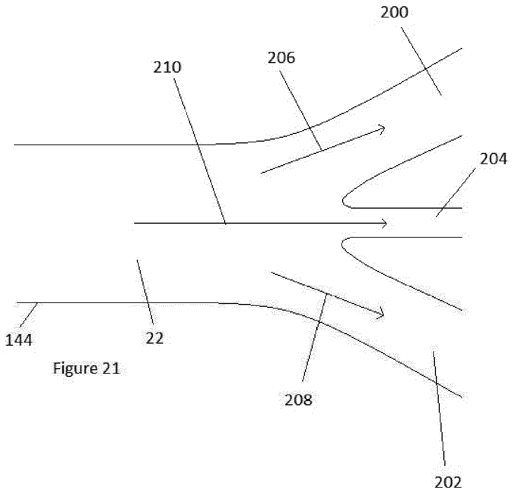

Reference is now made to Figures 21 to 23, which conceptually depict a three stage array of particle sorters 144, 146, 148 in accordance with a sixth embodiment of the invention. The first stage sorter 144 shown in Figure 21 removes dirt and larger particles from the fluid 22, and may for example remove particles larger than 50 microns or 60 microns. The large particles are focused by the first stage sorter 144 and are directed to the top and bottom canals 200, 202 as shown by arrows 206, 208. An unfocused stream of fluid 22 is directed into the middle canal 204 as shown by arrow 210, and will carry smaller particles present in the fluid 22 such as bacteria 100 and viruses 102. The first stage sorter 144 may optionally be used, for example, in place of the filter 64 in the first embodiment of the invention shown in Figures 1 to 6.

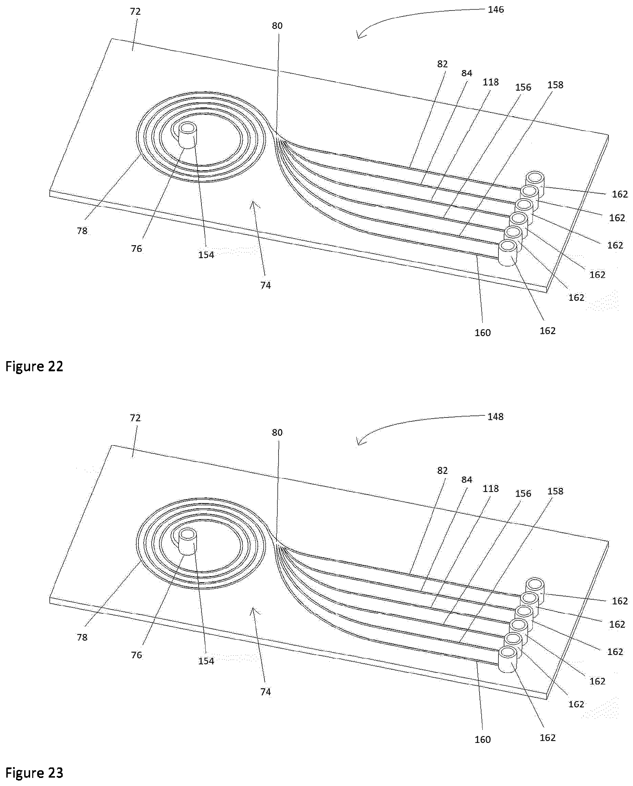

The unfocused stream of fluid 22 in the middle canal of the first stage sorter 144 is directed into the microchannel inlet 76 of the second stage sorter 146 shown in Figure 22. The second stage sorter 146 focuses clusters of bacteria 100 and larger particles, between approximately 5 microns and 20 microns. Smaller particles such as individual bacteria cells 100 and viruses 102 would not be focused or sorted by the second stage sorter 146. Although the second stage sorter 146 is shown in Figure 22 as using a spiral geometry for the sorting microchannel 78, other geometries could be used instead.

An unfocused stream of fluid 22 containing unfocused or unsorted particles such as individual bacteria cells 100 and viruses 102 is outputted by the second stage sorter 146 into the microchannel inlet 76 of the third stage sorter 148 shown in Figure 23. The third stage sorter 148 focuses particles between 1 micron and 3 microns, including the individual bacteria cells 100. The individual bacteria cells 100 are preferably sorted into different channels according to their size and/or shape, which can then be analyzed to obtain a measure of the concentration of each of the different sizes and/or shapes of bacteria cells 100 that are present in the fluid 22. Any viruses 102 smaller than 1 micron remain unfocused or unsorted and are dispersed throughout the fluid 22. Preferably, a negatively sorted stream 104 containing some of the unfocused or unsorted viruses 102 present in the fluid 22 is analyzed to obtain a measure of the concentration of viruses 102 in the fluid 22. The third stage sorter 148 could have any suitable geometry, and is not limited to the spiral shape shown in Figure 23.

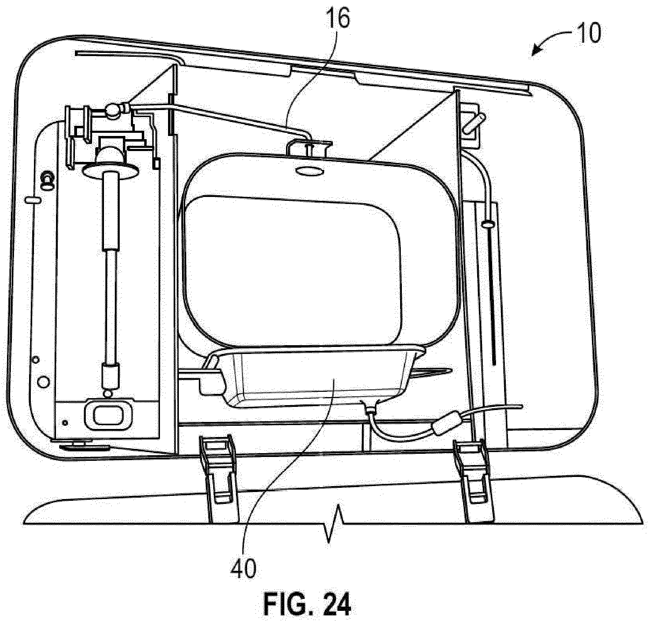

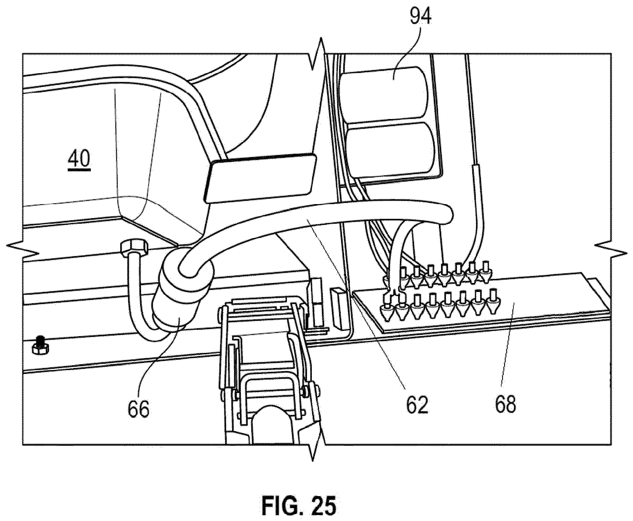

Reference is now made to Figures 24 and 25, which show a fluid dispenser 10 in accordance with a seventh embodiment of the present invention. Like numerals are used to denote like components.

The fluid dispenser 10 shown in Figures 24 and 25 has a drip tray 40 for collecting fluid 22 that has dripped off of a user's hand 28 positioned above the drip tray 40. A fluid pump 66 pumps the fluid 22 collected in the drip tray 40 to a microfluidic particle sorter 68, which sorts particles present in the fluid 22 according to shape and/or size. The microfluidic particle sorter 68 may for example: leave particles smaller than 0.8 microns, such as viruses 102, unfocused or unsorted, and thus present in a negatively sorted stream 104; focus particles between 1 micron and 3 microns into one or more focused streams, containing for example single bacteria cells 100, mostly rod shaped, such as E. coli and Pseudomonas; focus particles between 3 microns and 5 microns into one or more focused streams, containing for example larger bacteria such as spherical Coccus in groups of two, four or eight; and focus particles between 5 microns and 10 microns into one or more focused streams, containing for example larger bacteria clusters and Coccus chains. Any one or more of the streams produced by the microfluidic particle sorter 68 could then be analyzed to obtain a measure of the concentration of the particles contained therein.

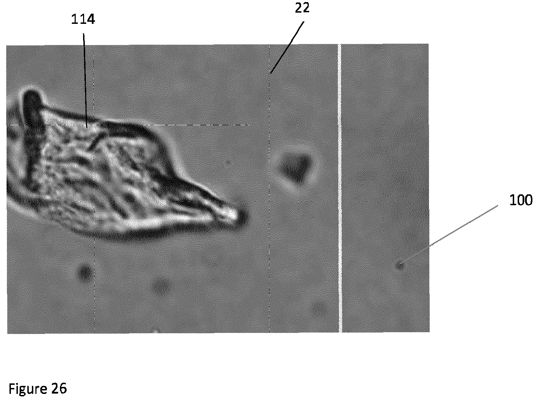

Reference is now made to Figure 26, which shows a microscopic image of hand cleaning fluid 22 that has contacted a user's hand 28. In the image shown, the fluid 22 comprises 3 mL of isopropanol, which contacted a user's hand 28, was stirred three times, and was spread unto a glass substrate for imaging. As can be seen in Figure 26, the fluid 22 contains particles of various sizes, including clusters of skin cells 114 and bacteria 100.

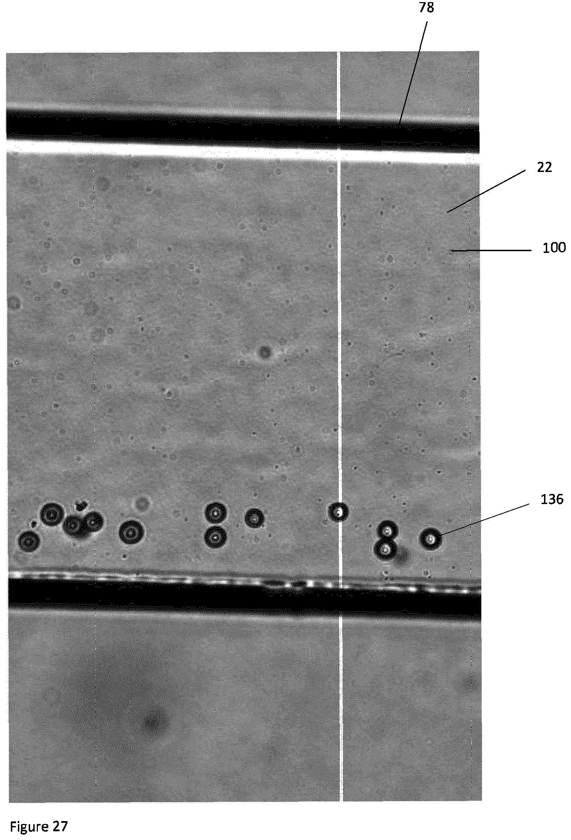

Reference is now made to Figure 27, which shows a microscopic image of a sorting microchannel 78 through which a fluid 22 is passed, the fluid 22 containing E. coli bacteria 100 and 10 micron beads 136. As can be seen in Figure 27, the 10 micron beads 136 have been focused into a focused stream, and the E. coli bacteria 100 remain unfocused and are dispersed throughout the fluid 22. This is an example showing what may be referred to as the negative sorting phenomenon, in which larger particles are focused into a focused stream, and smaller particles remain unfocused and are found in both the focused stream and in the unfocused remainder of the fluid 22. This negative sorting phenomenon may be used in various embodiments of the invention, as described above.

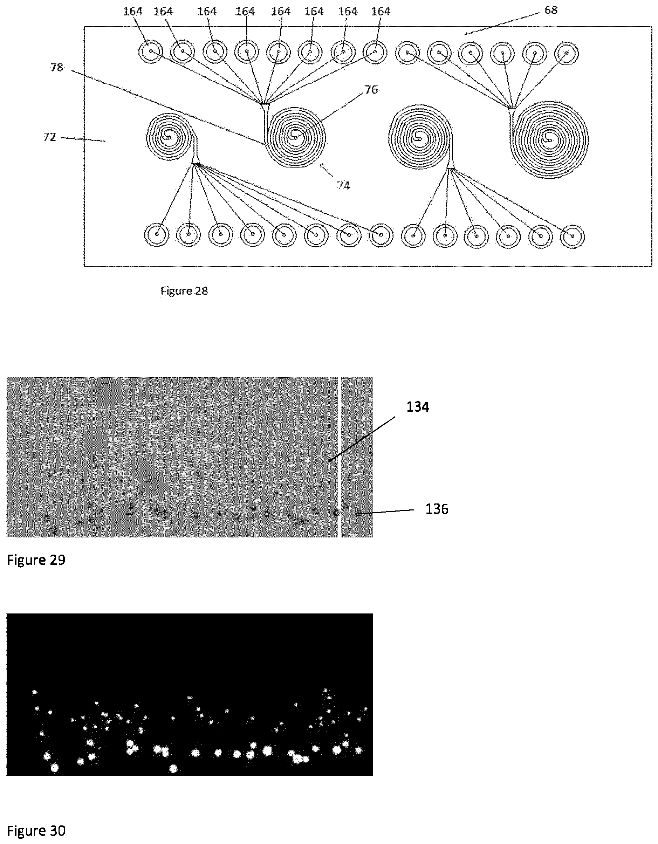

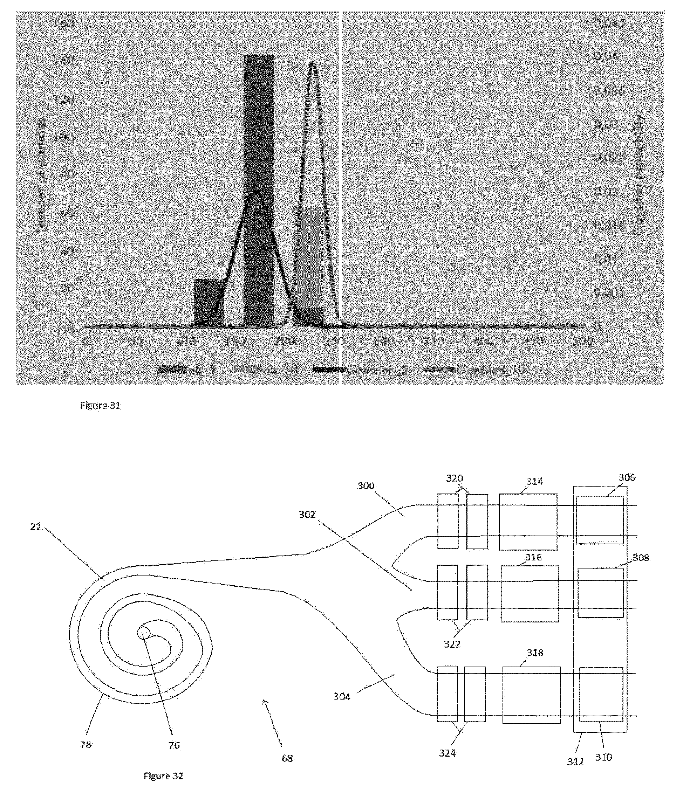

Reference is now made to Figures 28 to 31, which show a microfluidic particle sorter 68 used for an experiment, and the results of that experiment. A fluid 22 containing 5 micron beads 134 and 10 micron beads 136 was passed through the microfluidic particle sorter 68 at a flow rate of 550 microliters per minute. As can be seen in Figure 29, the 5 micron beads 134 were focused by the microfluidic particle sorter 68 into one focused stream and the 10 micron beads 136 were focused by the microfluidic particle sorter 68 into another focused stream. The results of the experiment are shown graphically in Figure 31. There were eight turns in the microchannel 78. The theoretical estimated sorting speed for the 10 micron beads 136 was 1212 microliters per minute, and the theoretical estimated sorting speed for the 5 micron beads 134 was 4850 microliters per minute.

Reference is now made to Figure 32, which shows a schematic drawing of a microfluidic particle sorter 68 in accordance with an eighth embodiment of the present invention. Like numerals are used to denote like components. Fluid 22 that has contacted a user's hand 28 is received by the microfluidic particle sorter 68 at the microchannel inlet 76. Preferably, particles larger than 50 microns are removed from the fluid 22 before the fluid 22 enters the microchannel inlet 76, for example by a filter 64. The spiral shaped sorting microchannel 78 sorts the particles present in the fluid 22 by size and/or shape (e.g. cluster, chain, spherical, and rod-shaped). The sorted particles are guided into different canal branches. For example, in the embodiment shown in Figure 32, the particles are directed into three canals 300, 302, 304. Canal 300 is for particles below 1 micron, such as viruses (not-sorted); canal 302 is for 3 micron particles and viruses; and canal 304 is for 10 micron particles and viruses. After the division into different branches the detection takes place. The detection can be realized, for example, electrically (e.g. impedance), acoustically (e.g. ultra sound) or optically (e.g. light microscopy/ phase contrast) in each of the sub canals. Other detection methods might include one or more of: spectroscopic, mechanical, thermal, and chemical methods. In case of the optical detection, optionally one microscope image 312 is taken and the particles are counted in each region of interest 306, 308, 310 by one detection unit. By means of the number of particles the concentration can be determined. In case of the acoustic or electric system, each sub-canal is equipped with one acoustic detection unit 314, 316, 318 or electrodes 320, 322, 324. With respect to the electrical method, each canal 300, 302, 304 is equipped with one set of electrodes 320, 322, 324. All electrode pairs 320, 322, 324 can be read out by a multiplexed impedance instrument. Again the concentration is measured. In the case of impedance, the concentration can be detected within milliseconds and is related to the resistivity. In the presence of pathogens, the resistivity decreases.

Viruses 102 can be detected by the negative sorting and are generally only present when a viral infection is present. In other words, the detection of viruses 102 is preferably a 100% positive detection of a viral infection. If a bacterial infection is present one of the branches may show an increased concentration of particles compared to a baseline. The branch with the increased concentration may provide evidence of a specific infection. The method is preferably able to narrow the type of bacterial infection down to a few different candidates, based for example on the size and/or shape of the bacteria 100 and/or cluster type. Even spores of a Bacillus and Clostridium could preferably be detected as spores will preferably be sorted as separated particles in one particular canal.

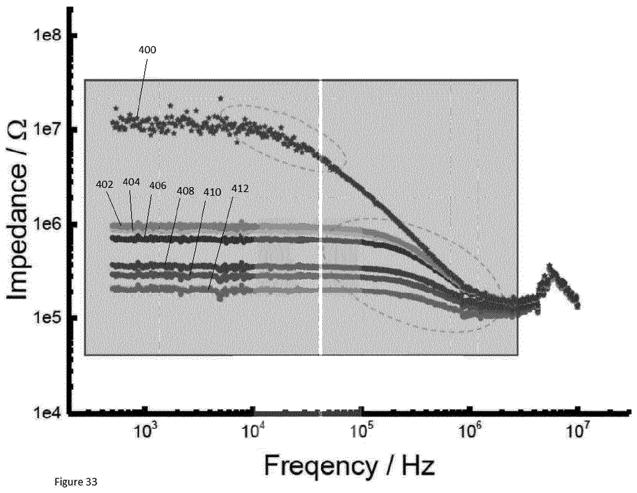

Reference is now made to Figure 33, which is a graphic showing the results of an experiment measuring the electrical impedance of isopropanol fluid 22 containing different concentrations of E. coli. The line 400 represents isopropanol; the line 402 represents E. Coli at a 1:100 concentration; the line 404 represents E. Coli at a 1:50 concentration; the line 406 represents E. Coli at a 1:8 concentration; the line 408 represents E. Coli at a 1:4 concentration; the line 410 represents E. Coli at a 1:2 concentration; and the line 412 represents E. Coli at a 1:1 concentration. As can be seen in Figure 33, the electrical impedance of the fluid 22 decreases as the concentration of E. coli in the fluid 22 increases. Measuring the electrical impedance of the fluid 22 therefore preferably provides a measure of the concentration of a particle of interest in the fluid 22. Preferably, a reliable measure of the concentration can be obtained by a relatively fast scan in a narrow frequency interval at about 1000 Hz, or in the range of 1000 Hz to 10000 Hz.

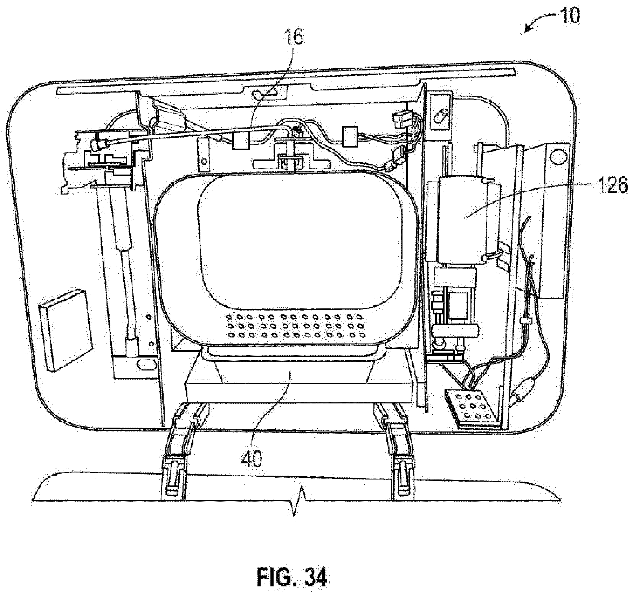

Reference is now made to Figures 34 to 36, which show a fluid dispenser 10 in accordance with a ninth embodiment of the present invention. Like numerals are used to denote like components.

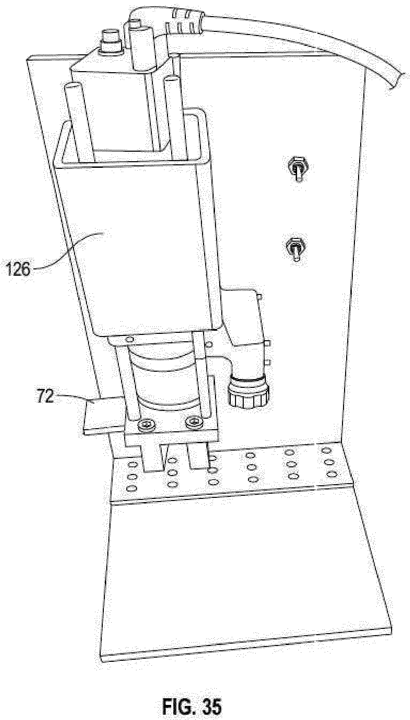

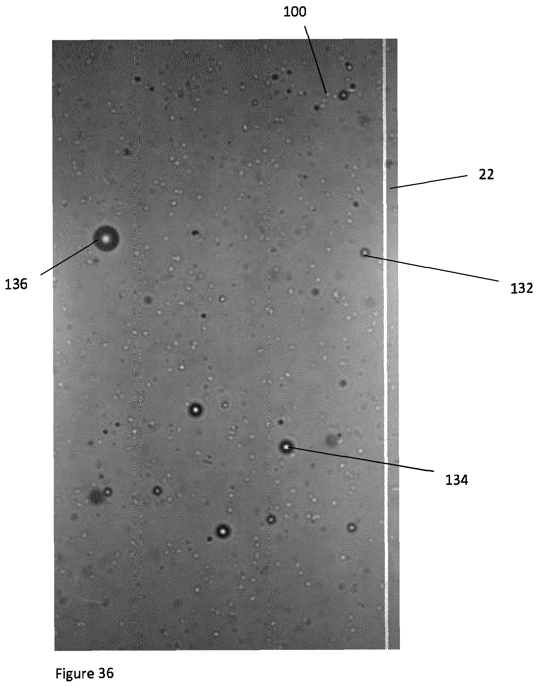

The fluid dispenser 10 shown in Figures 34 and 35 includes a microscope 126, which is used to obtain microscopic images of the fluid 22 as the fluid 22 passes through the microfluidic particle sorter 68. An example of a microscopic image taken by the microscope 126 is shown in Figure 36. The microscopic images are preferably analyzed to obtain a measure of the concentration of the particles in each output channel 82, 84 of the microfluidic particle sorter 68. The microscopic images may, for example, be analyzed by a computer algorithm. Preferably, because the particles in the output channels 82, 84 are already sorted by size, the computer algorithm can be relatively simple and merely count the particles in each channel, without having to distinguish between particles of different sizes.

It will be understood that, although various features of the invention have been described with respect to one or another of the embodiments of the invention, the various features and embodiments of the invention may be combined or used in conjunction with other features and embodiments of the invention as described and illustrated herein.

The invention is not limited to the particular construction of the fluid dispenser 10, including the actuator lever 18, the fluid outlet 24, the housing 12, the fluid reservoir 14, the pump mechanism 16, the drip tray 40, or the nozzle shield 20, as shown in the drawings. Rather, any fluid dispenser 10 construction could be adapted to perform the method of the present invention, including for example those taught in United States Patent No. 8,245,877 to Ophardt, issued August 21, 2012; United States Patent No. 8,113,388 to Ophardt et al., issued February 14, 2012; United States Patent No. 8,091,739 to Ophardt et al., issued January 10, 2012; United States Patent No. 7,748,573 to Anhuf et al., issued July 6, 2010; U.S. Patent No. 7,984,825 to Ophardt et al., issued July 26, 2011; U.S. Patent No. 8,684,236 to Ophardt, issued April 1, 2014; U.S. Patent No. 5,373,970 to Ophardt, issued December 20, 1994; U.S. Patent No. 5,836,482 to Ophardt et al., issued November 17, 1998; and U.S. Patent No. 9,682,390 to Ophardt et al., issued June 20, 2017. Although the fluid dispenser 10 shown in Figures 1 to 6 is adapted for manual activation, the invention could also be performed using a touchlessly operated fluid dispenser 10. In some embodiments of the invention, the filter 64 may be omitted, or may be located at a different position in the fluid pathway 62 than is shown in the drawings.

Optionally, the fluid dispenser 10 has an infection testing mode in which a greater quantity of fluid 22 is dispensed than when in a hand sanitizing mode, so that sufficient overspray is produced so that the fluid 22 drips off of the user's hand 28 and into the drip tray 40. The fluid dispenser 10 could also optionally be configured to dispense a different fluid 22 when in the infection testing mode than when in the hand sanitizing mode.

The invention is not limited to being performed by or using a hand cleaning fluid dispenser 10. Rather, the method could for example be performed as a standalone method for testing for a pathogen, such as a virus 102. For example, the fluid 22 could be swished around a person's mouth before being processed and analyzed in accordance with the invention, to for example test for the presence of viruses 102. The fluid 22 could, for example, be water. Any suitable method of obtaining a sample fluid 22 could be used, including for example swabbing a part of the user's body such as their nose, face, ears, tongue, or hands, and then placing the swab in the fluid 22 to disburse particles present on the swab into the fluid 22. Other non-biological surfaces could be swabbed as well, such as for example, door knobs, desks, railings, or chairs, to for example test for the presence of viruses 102 in a particular room, environment, workplace, or group of persons. Optionally, the method could be adapted to test for airborne particles by, for example, passing an air sample from a ventilation system through a fluid 22 so that particles present in the air become dispersed in the fluid 22, and then processing and analyzing the fluid 22 in accordance with the invention. The invention may also be used for example to test for contaminants on products, such as food products, by for example running fluid 22 over the food products and then processing and analyzing the fluid 22 in accordance with the invention.

The invention is not limited to any particular set of operational parameters for the microfluidic particle sorter 68, including for example the type of fluid 22; the size and shape of the sorting microchannel 78; the number of output channels 82, 84, 118; the particle sizes and/or shapes that are sorted and/or negatively sorted; and the flow velocity and/or fluid pressure. The operating parameters may be adapted as necessary to provide the desired sorting and/or negative sorting. The operating parameters that allow for sorting and/or negative sorting of a particular particle of interest or a particular size and/or shape of particle may be determined through routine experimentation. In order to negatively sort a particular particle of interest, the operating parameters should be selected so that particles above a threshold size are focused and separated into one or more distinct channels or streams, the threshold size being larger than the size of the particle of interest. Optionally, the invention may be performed using a single microfluidic particle sorter 68 having any suitable number of output channels 82, 84, 118, or with an array of multiple microfluidic particle sorters 68. When an array of multiple microfluidic particle sorters 68 is used, the output from one or more output channels 82, 84, 118 may be used as the input for a subsequent microfluidic particle sorter 68 in the array. The microfluidic particle sorter 68 is also referred to herein as the negative sorting device 68.

Any suitable shape of the sorting microchannel 78 could be selected that provides the desired sorting and/or negative sorting of particles, including for example any one or more of the following: curved segments, straight segments, spiral segments, serpentine segments, and segments where the width and/or depth of the microchannel 78 changes.

The microfluidic particle sorter 68 could be made from any suitable material or materials, including one or more of the following: polymers, silicon, metal, and glass.

The invention may use any suitable apparatus, method, and/or technique for analyzing the fluid 22. The fluid 22 in every output channel 82, 84, 118 or in only selected output channels 82, 84, 118 may be analyzed to obtain a measure of the concentration of particles in the fluid 22. Optionally, the analysis of the fluid 22 in each of the different output channels 82, 84, 118 may be performed using the same apparatus, method, and/or technique, or the analysis of the fluid 22 in some output channels 82, 84, 118 may be performed using a different apparatus, method, and/or technique.

In some embodiments of the invention, the fluid 22 in the negatively sorted stream 104 and/or the focused stream or streams may be analyzed optically to detect particles in the fluid 22. For example, a microscope 126 could be incorporated into the fluid dispenser 10 in the manner as shown in Figures 34 and 35, with the microscope 126 being configured to capture microscopic images of the fluid 22. The microscopic images are, for example, processed by the processor 96 to count, calculate, or estimate a quantity of particles of interest in each of the images. The quantity of the particles of interest in the image can be used as the measure of the concentration of the particles of interest in the fluid 22, which in turn may be used to assess the likelihood of that the user 26 has an infection.

In at least some preferred embodiments of the invention, the analysis of the fluid 22 can be imperfect, and does not need to provide conclusive proof of the exact concentration of a particular particle of interest, such as a virus 102, in the fluid 22. Rather, the analysis is preferably cheap, low cost, and fast, and provides an indication of a possible infection, which can then be investigated further. For example, if the measure of the concentration of particles in a particular sorted and/or negatively sorted stream of fluid 22 is higher than normal, this can be used as an indication of a possible infection, which can then be investigated further using for example a culture test or a PCR test for a particular pathogen or pathogens of concern. Likewise, an increase in the prevalence of higher than normal concentrations of particles of particular sizes in a particular geographic location as measured by multiple fluid dispensers 10 may provide an indication that something unusual is occurring at that geographic location that should be investigated further.

In some embodiments of the invention, the measure of the particles of interest that is obtained does not necessarily provide conclusive proof that the particles of interest are present in the fluid 22, or that the particles of interest are present at a particular concentration or range of concentrations. For example, depending on how the measure of the concentration of the particles of interest is obtained, the measure could be affected by the presence of other particles in the fluid 22 that are not the particles of interest. In some embodiments of the invention, the presence of very small dirt particles in the fluid 22 may, for example, impact the measure of the concentration of the particles of interest that is obtained. Any analysis that provides a result, measurement, or value that would in at least some circumstances be dependent on the concentration of the particles of interest in the fluid 22 could be considered to be providing a measure of the concentration of the particles of interest in the context of the present invention, even if the result, measurement, or value does not provide conclusive proof of the actual presence or concentration of the particles of interest.

The invention is not limited to the use of any particular fluid 22. Rather, any suitable fluid 22 for performing the desired processing and analysis could be used. For example, in at least some embodiments of the invention the fluid 22 could include one or more of: water, a buffered polar solution, acids, bases, ionic fluids, alcohol, water mixed with alcohol, water mixed with at least 30% alcohol, water mixed with at least 50% alcohol, water mixed with at least 60% alcohol, water mixed with at least 70% alcohol, water mixed with at least 80% alcohol, water mixed with at least 90% alcohol, water mixed with at least 95% alcohol, pure alcohol, isopropanol, ethanol, methanol, a polar liquid or solution, or a non-polar liquid or solution, independent of its pH or any other additives. In some embodiments of the invention, the fluid 22 may comprise a bodily fluid such as saliva, tears, sweat, mucous, or urine.

In some preferred embodiments of the invention, the fluid 22 is selected to be non-polar or to have a low polarity, as compared for example with pure water. The fluid 22 may for example include an alcohol such as isopropanol mixed with water. The applicant has found that fluids 22 that are non-polar or have a low polarity, including concentrated isopropanol, have a relatively high electrical impedance when no particles are present in the fluid 22. When biological particles such as viruses 102 or bacteria 100 are present in the fluid 22, for example in the case of isopropanol, the electrical impedance decreases. As dirt particles are generally electrical insulators, any dirt particles that may be present in the fluid 22 would not be expected to decrease the electrical impedance of the fluid 22. As such, when electrical impedance is used as a measure of the concentration of biological particles such as viruses 102 or bacteria 100 in a non-polar or low polarity fluid 22, the presence of dirt particles in the fluid 22 preferably does not substantially affect the electrical impedance measurement. This preferably improves the accuracy of the measure of the concentration of the particles of interest in the fluid 22. For example, if the fluid 22 is non-polar or has a low polarity, a decrease in the electrical impedance of the fluid 22 preferably provides a relatively reliable indication that biological particles of interest are present in the fluid 22, rather than an insulating particle such as dirt. In contrast, if a polar fluid 22 such as water is used, the presence of insulating particles such as dirt in the fluid 22 would be expected to affect the electrical impedance of the fluid 22, which could cause the electrical impedance to be a less accurate measure of the concentration of the particles of interest in the fluid 22.

Any suitable manner of directing the fluid 22 through the microfluidic particle sorter 68 could be used. Preferably, the operating parameters of the microfluidic particle sorter 68 are selected so that a small, low-powered fluid pump 66 is able to provide the required fluid pressure and/or flow velocity. In some embodiments of the invention, forces such as gravity or capillary forces may be sufficient to produce adequate sorting, without the need for a fluid pump 66.

The invention could also use different methods, techniques, or apparatuses for sorting and/or negative sorting particles in addition to or in place of the microfluidic particle sorter 68. For example, some embodiments of the invention may use other mechanical, magnetic, electrical, and/or optical methods of sorting particles according to size, shape, and/or other characteristics of the particles.

Information about the concentration of particles in the fluid 22 may be used for any desired purpose, and is not limited to the identification of possible infections as described in the preferred embodiments. The invention is not limited to analyzing the concentrations of biological particles, and could be used to detect non-biological particles as well.

In some of the preferred embodiments of the invention described above, the measure of the likelihood that the user 26 has an infection has been described as optionally being informed by a comparison of the measure of the concentration of the particles of interest to a baseline value. The invention is not limited to this manner of establishing the measure of the likelihood that the user 26 has an infection. Rather, any suitable method of estimating or calculating or predicting the likelihood of the presence of an infection could be used. For example, in some embodiments of the invention the measure of the concentration of the particles of interest in the fluid 22 could be tracked over time, using for example samples of the fluid 22 obtained from different users 26 of the fluid dispenser 10 over time. Changes in the measure of the concentration of the particles of interest over time could then be monitored and used to inform the measure of the likelihood that an infection is present. For example, if the measure of the concentration of the particles of interest is increasing over time, this could be used as an indication that more recent users 26 of the dispenser 10 are more likely to have an infection than were the previous users 26 of the dispenser 10.

The present invention may be used to obtain a measure of the concentration of any suitable particle of interest in a fluid 22, and is not limited to the particular particles identified in the preferred embodiments. For example, the particles of interest could include one or more of the following: viral particles, bacterial particles, prions, parasites, pathogens, spores, fungal particles, proteins, cancer cells, blood cells, human cells, animal cells, enzymes, microplastics, and dust particles. As used herein, the term "viral particles" includes live viruses, dead viruses, fractions of viruses, and clusters of viruses. The term "bacterial particles" as used herein includes live bacteria, dead bacteria, individual bacteria cells, clusters of bacteria cells, chains of bacteria cells, and fractions of bacteria cells.

The term "fluid" as used herein includes any flowable substance, including liquids, solutions, foams, emulsions, acids, bases, and dispersions.

The term "micron" as used herein refers to a micrometer or µm. The particle sizes provided herein, such as 1 micron, 3 microns, 5 microns, and 10 microns, refer to the diameter of the particle, unless otherwise stated.

## Claims

1. A method comprising:
passing a fluid (22) through a negative sorting device (68) that produces a negatively sorted stream (104) of the fluid (22) from which particles present in the fluid (22) that are above a threshold size have been removed; and
analyzing the negatively sorted stream (104) to obtain a measure of a concentration of particles of interest in the negatively sorted stream (104);
wherein the particles of interest have a size that is less than or equal to the threshold size;
wherein the negative sorting device (68) comprises a microfluidic particle sorter (68) that produces at least one focused fluid stream and at least one unfocused fluid stream;
wherein the microfluidic particle sorter (68) directs the particles present in the fluid (22) that are above the threshold size into the at least one focused fluid stream without focusing the particles of interest, so that the particles of interest remain in both the at least one focused fluid stream and the at least one unfocused fluid stream; and
wherein the at least one unfocused fluid stream comprises the negatively sorted stream (104).

2. The method according to claim 1, wherein the particles of interest comprise at least one of:
a biological particle;
a bacterial particle;
a viral particle; and
an infectious agent.

3. The method according to claim 1 or 2, wherein analyzing the negatively sorted stream (104) comprises measuring an electrical impedance of the negatively sorted stream (104).

4. The method according to claim 3, wherein analyzing the negatively sorted stream (104) comprises comparing the electrical impedance of the negatively sorted stream (104) to a comparison electrical impedance value.

5. The method according to claim 4, wherein the comparison electrical impedance value comprises a known or estimated electrical impedance of the fluid (22) when the fluid (22) contains none of the particles of interest.

6. The method according to claim 4, wherein the comparison electrical impedance value comprises a known or estimated electrical impedance of the fluid (22) when the fluid (22) contains a baseline concentration of the particles of interest;
wherein the baseline concentration of the particles of interest comprises a known or estimated concentration of the particles of interest in the fluid (22) when the fluid (22) is prepared under a baseline condition; and
wherein the baseline condition comprises an absence of an infection in an individual from which the fluid (22) is obtained.

7. The method according to claim 4, wherein the comparison electrical impedance value comprises a known or estimated electrical impedance of the fluid (22) when the fluid (22) contains a target concentration of the particles of interest;
wherein the target concentration of the particles of interest comprises a known or estimated concentration of the particles of interest in the fluid (22) when the fluid (22) is prepared under a target condition; and
wherein the target condition comprises a presence of an infection in an individual from which the fluid (22) is obtained.

8. The method according to any one of claims 1 to 7, wherein the fluid (22) comprises at least one of:
an alcohol; and
a hand cleaning fluid (22).

9. The method according to any one of claims 1 to 8, further comprising at least one of:
collecting the fluid (22) from a body of a human or an animal; and
placing a sample in the fluid (22), the sample containing particles collected from an object, an organism, or an environment.

10. The method according to any one of claims 1 to 9, further comprising:
contacting the fluid (22) with a surface; and
directing the fluid (22) to the negative sorting device (68) after the fluid (22) has contacted the surface.

11. The method according to claim 10, wherein the surface comprises an internal surface or an external surface of a human body.

12. The method according to any one of claims 1 to 11, wherein analyzing the negatively sorted stream (104) comprises optically detecting particles in the negatively sorted stream (104).

13. The method according to any one of claims 1 to 12, wherein analyzing the negatively sorted stream (104) comprises:
obtaining an optical image of the fluid (22) in the negatively sorted stream (104); and
analyzing the optical image to count, calculate, or estimate a quantity of the particles of interest in the optical image.

14. The method according to any one of claims 1 to 13, further comprising:
dispensing the fluid (22) onto a hand (28) of a person (26);
collecting the fluid (22) after the fluid (22) has contacted the hand (28); and
directing the fluid (22) to the negative sorting device (68) after the fluid (22) has contacted the hand (28).

15. The method according to any one of claims 1 to 14, wherein the microfluidic particle sorter (68) is operated at a fluid pressure that is too low to focus the particles of interest.

## Patentansprüche

1. Ein Verfahren, umfassend:
Leiten eines Fluids (22) durch eine negative Sortiervorrichtung (68), die einen negativ sortierten Strom (104) des Fluids (22) erzeugt, aus dem im Fluid (22) vorhandene Partikel, die über einer Schwellenwertgröße liegen, entfernt worden sind; und
Analysieren des negativ sortierten Stroms (104), um ein Maß für eine Konzentration von interessierenden Partikeln im negativ sortierten Strom (104) zu erhalten;
wobei die interessierenden Partikel eine Größe haben, die kleiner oder gleich der Schwellenwertgröße ist;
wobei die negative Sortiervorrichtung (68) einen mikrofluidischen Partikelsortierer (68) umfasst, der mindestens einen fokussierten Fluidstrom und mindestens einen unfokussierten Fluidstrom erzeugt;
wobei der mikrofluidische Partikelsortierer (68) die im Fluid (22) vorhandenen Partikel, die über der Schwellenwertgröße liegen, in den mindestens einen fokussierten Fluidstrom leitet, ohne die interessierenden Partikel zu fokussieren, so dass die interessierenden Partikel sowohl in dem mindestens einen fokussierten Fluidstrom als auch in dem mindestens einen unfokussierten Fluidstrom verbleiben; und
wobei der mindestens eine unfokussierte Fluidstrom den negativ sortierten Strom (104) umfasst.

2. Das Verfahren nach Anspruch 1, wobei die interessierenden Partikel mindestens eines der folgenden umfassen:
ein biologisches Partikel;
ein bakterielles Partikel;
ein virales Partikel; und
ein infektiöses Agens.

3. Das Verfahren nach Anspruch 1 oder 2, wobei das Analysieren des negativ sortierten Stroms (104) das Messen einer elektrischen Impedanz des negativ sortierten Stroms (104) umfasst.

4. Das Verfahren nach Anspruch 3, wobei das Analysieren des negativ sortierten Stroms (104) das Vergleichen der elektrischen Impedanz des negativ sortierten Stroms (104) mit einem elektrischen Vergleichsimpedanzwert umfasst.

5. Das Verfahren nach Anspruch 4, wobei der elektrische Vergleichsimpedanzwert eine bekannte oder geschätzte elektrische Impedanz des Fluids (22) umfasst, wenn das Fluid (22) keine der interessierenden Partikel enthält.

6. Das Verfahren nach Anspruch 4, wobei der elektrische Vergleichsimpedanzwert eine bekannte oder geschätzte elektrische Impedanz des Fluids (22) umfasst, wenn das Fluid (22) eine Basiskonzentration der interessierenden Partikel enthält;
wobei die Basiskonzentration der interessierenden Partikel eine bekannte oder geschätzte Konzentration der interessierenden Partikel in dem Fluid (22) umfasst, wenn das Fluid (22) unter einer Basisbedingung aufbereitet wird; und
wobei die Basisbedingung die Abwesenheit einer Infektion bei einem Individuum umfasst, von dem das Fluid (22) gewonnen wird.

7. Das Verfahren nach Anspruch 4, wobei der elektrische Vergleichsimpedanzwert eine bekannte oder geschätzte elektrische Impedanz des Fluids (22) umfasst, wenn das Fluid (22) eine Zielkonzentration der interessierenden Partikel enthält;
wobei die Zielkonzentration der interessierenden Partikel eine bekannte oder geschätzte Konzentration der interessierenden Partikel in dem Fluid (22) umfasst, wenn das Fluid (22) unter einer Zielbedingung aufbereitet wird; und
wobei die Zielbedingung das Vorhandensein einer Infektion bei einem Individuum umfasst, von dem das Fluid (22) gewonnen wird.

8. Das Verfahren nach einem der Ansprüche 1 bis 7, wobei das Fluid (22) mindestens eines der folgenden umfasst:
einen Alkohol; und
eine Handreinigungsflüssigkeit (22).

9. Das Verfahren nach einem der Ansprüche 1 bis 8, weiterhin umfassend mindestens eines der folgenden:
Entnehmen des Fluids (22) von einem Körper eines Menschen oder eines Tieres; und
Einbringen einer Probe in das Fluid (22), wobei die Probe Partikel enthält, die von einem Objekt, einem Organismus oder einer Umgebung gesammelt wurden.

10. Das Verfahren nach einem der Ansprüche 1 bis 9, weiterhin umfassend:
Inkontaktbringen des Fluids (22) mit einer Oberfläche; und
Leiten des Fluids (22) zu der negativen Sortiervorrichtung (68), nachdem das Fluid (22) die Oberfläche kontaktiert hat.

11. Das Verfahren nach Anspruch 10, wobei die Oberfläche eine innere Oberfläche oder eine äußere Oberfläche eines menschlichen Körpers umfasst.

12. Das Verfahren nach einem der Ansprüche 1 bis 11, wobei das Analysieren des negativ sortierten Stroms (104) das optische Detektieren von Partikeln in dem negativ sortierten Strom (104) umfasst.

13. Das Verfahren nach einem der Ansprüche 1 bis 12, wobei das Analysieren des negativ sortierten Stroms (104) umfasst:
Aufnehmen eines optischen Bildes des Fluids (22) im negativ sortierten Strom (104); und
Analysieren des optischen Bildes, um eine Menge der interessierenden Partikel in dem optischen Bild zu zählen, zu berechnen oder zu schätzen.

14. Das Verfahren nach einem der Ansprüche 1 bis 13, weiterhin umfassend:
Abgeben des Fluids (22) auf eine Hand (28) einer Person (26);
Auffangen des Fluids (22), nachdem das Fluid (22) die Hand (28) kontaktiert hat; und
Leiten des Fluids (22) zu der negativen Sortiervorrichtung (68), nachdem das Fluid (22) die Hand (28) kontaktiert hat.

15. Das Verfahren nach einem der Ansprüche 1 bis 14, wobei der mikrofluidische Partikelsortierer (68) bei einem Fluiddruck betrieben wird, der zu niedrig ist, um die interessierenden Partikel zu fokussieren.

## Revendications

1. Procédé comprenant :
le passage d'un fluide (22) à travers un dispositif de tri négatif (68) qui produit un flux trié négativement (104) du fluide (22), duquel les particules présentes dans le fluide (22) dont la taille est supérieure à un seuil ont été éliminées ; et
l'analyse du flux trié négativement (104) pour obtenir une mesure de la concentration en particules d'intérêt dans le flux trié négativement (104) ;
dans lequel les particules d'intérêt ont une taille inférieure ou égale à la taille seuil ;
dans lequel le dispositif de tri négatif (68) comprend un trieur de particules microfluidique (68) qui produit au moins un flux de fluide ciblé et au moins un flux de fluide non ciblé ;
dans lequel le trieur de particules microfluidique (68) envoie les particules présentes dans le fluide (22) dont la taille est supérieure au seuil dans ledit au moins un flux de fluide ciblé sans cibler les particules d'intérêt, de sorte que les particules d'intérêt restent à la fois dans ledit au moins un flux de fluide ciblé et dans ledit au moins un flux de fluide non ciblé ; et
dans lequel ledit au moins un flux de fluide non ciblé comprend le flux trié négativement (104).

2. Procédé selon la revendication 1, dans lequel les particules d'intérêt comprennent au moins l'un des éléments suivants :
une particule biologique ;
une particule bactérienne ;
une particule virale ; et
un agent infectieux.

3. Procédé selon la revendication 1 ou 2, dans lequel l'analyse du flux trié négativement (104) comprend la mesure d'une impédance électrique du flux trié négativement (104).

4. Procédé selon la revendication 3, dans lequel l'analyse du flux trié négativement (104) comprend la comparaison de l'impédance électrique du flux trié négativement (104) à une valeur d'impédance électrique de comparaison.

5. Procédé selon la revendication 4, dans lequel la valeur d'impédance électrique de comparaison comprend une impédance électrique connue ou estimée du fluide (22) quand le fluide (22) ne contient aucune des particules d'intérêt.

6. Procédé selon la revendication 4,
dans lequel la valeur d'impédance électrique de comparaison comprend une impédance électrique connue ou estimée du fluide (22) quand le fluide (22) contient une concentration de référence des particules d'intérêt ;
dans lequel la concentration de référence des particules d'intérêt comprend une concentration connue ou estimée des particules d'intérêt dans le fluide (22) quand le fluide (22) est préparé sous une condition de référence ; et
dans lequel la condition de référence comprend l'absence d'infection chez un individu dont le fluide (22) est obtenu.

7. Procédé selon la revendication 4,
dans lequel la valeur d'impédance électrique de comparaison comprend une impédance électrique connue ou estimée du fluide (22) quand le fluide (22) contient une concentration cible des particules d'intérêt ;
dans lequel la concentration cible des particules d'intérêt comprend une concentration connue ou estimée des particules d'intérêt dans le fluide (22) quand le fluide (22) est préparé sous une condition cible ; et
dans lequel la condition cible comprend la présence d'une infection chez un individu dont le fluide (22) est obtenu.

8. Procédé selon l'une quelconque des revendications 1 à 7, dans lequel le fluide (22) comprend au moins l'un des éléments suivants :
un alcool ; et
un fluide de nettoyage des mains (22).

9. Procédé selon l'une quelconque des revendications 1 à 8, comprenant en outre au moins l'une des opérations suivantes :
collecte du fluide (22) provenant du corps d'un humain ou d'un animal ; et
placement d'un échantillon dans le fluide (22), l'échantillon contenant des particules collectées à partir d'un objet, d'un organisme ou de l'environnement.

10. Procédé selon l'une quelconque des revendications 1 à 9, comprenant en outre :
la mise en contact du fluide (22) avec une surface ; et
l'envoi du fluide (22) au dispositif de tri négatif (68) après que le fluide (22) a été en contact avec la surface.

11. Procédé selon la revendication 10, dans lequel la surface comprend une surface interne ou une surface externe d'un corps humain.

12. Procédé selon l'une quelconque des revendications 1 à 11, dans lequel l'analyse du flux trié négativement (104) comprend la détection optique de particules dans le flux trié négativement (104).

13. Procédé selon l'une quelconque des revendications 1 à 12, dans lequel l'analyse du flux trié négativement (104) comprend :
l'obtention d'une image optique du fluide (22) dans le flux trié négativement (104) ; et
l'analyse de l'image optique pour compter, calculer ou estimer une quantité de particules d'intérêt dans l'image optique.

14. Procédé selon l'une quelconque des revendications 1 à 13, comprenant en outre :
la distribution du fluide (22) sur la main (28) d'une personne (26) ;
la collecte du fluide (22) après que le fluide (22) a été en contact avec la main (28) ; et
l'envoi du fluide (22) au dispositif de tri négatif (68) après que le fluide (22) a été en contact avec la main (28).

15. Procédé selon l'une quelconque des revendications 1 à 14, dans lequel le trieur de particules microfluidique (68) est utilisé à une pression de fluide trop faible pour cibler les particules d'intérêt.
